# EUROPÄISCHE PATENTSCHRIFT

(11) **EP 3 691 455 B1**
(45) Veröffentlichungstag und Bekanntmachung des Hinweises auf die Patenterteilung: **25.10.2023**
(21) Anmeldenummer: 18796587.6
(22) Anmeldetag: 27.09.2018
(51) Int. Cl.: A21D 2/26, A21D 8/04, A21D 10/00, A23L 7/109, A23L 33/185

(54) **VERTRÄGLICHE MEHLZUSAMMENSETZUNG**
WELL-TOLERATED FLOUR COMPOSITION
COMPOSITION DE FARINE TOLÉRÉE

(30) Priorität: 27.09.2017 DE 102017122407
(43) Veröffentlichungstag der Anmeldung: 12.08.2020
(73) Patentinhaber: Ernst Böcker GmbH & Co. KG, 32427 Minden (DE)
(72) Erfinder: BÖCKER, Georg, 32427 Minden (DE); BRANDT, Markus, 32423 Minden (DE); DÜSTERBERG, Markus, 32312 Lübbecke (DE); SCHUPPAN, Detlef, 55122 Mainz (DE)
(74) Vertreter: Fleuchaus & Gallo Partnerschaft mbB
(86) Internationale Anmeldenummer: PCT/EP2018/076323
(87) Internationale Veröffentlichungsnummer: WO 2019/063721

(56) Entgegenhaltungen:
- WO-A1-2015/168416
- DE-U1- 29 704 037
- DATABASE GNPD [Online] MINTEL; 18. Mai 2017 (2017-05-18), anonymous: "Light Bread Mix with Golden Linseed", XP055539618, gefunden im www.gnpd.com Database accession no. 4828393
- DATABASE GNPD [Online] MINTEL; 19. September 2017 (2017-09-19), anonymous: "Gluten-Free Universal Baking Mix", XP055539640, gefunden im www.gnpd.com Database accession no. 5105525
- DATABASE GNPD [Online] MINTEL; 23. August 2017 (2017-08-23), anonymous: "Bread & Pizza Powder Mix", XP055539649, gefunden im www.gnpd.com Database accession no. 5032651
- DATABASE EPODOC [Online] EUROPEAN PATENT OFFICE, THE HAGUE, NL; 7. Juli 2014 (2014-07-07), "CALCIUM-ENRICHED GLUTEN-FREE COOKIES", XP002788184, Database accession no. ph-22013000087-u & PH 2201 3000 087 Y1 (CEBU TECHNOLOGICAL UNIVERSITY MAIN CAMPUS [PH]) 7. Juli 2014 (2014-07-07)
- DATABASE GNPD [Online] MINTEL; 10. Juli 2014 (2014-07-10), anonymous: "Fettuccine No. 28", XP055539697, gefunden im www.gnpd.com Database accession no. 2534389
- DATABASE GNPD [Online] MINTEL; 13. September 2013 (2013-09-13), anonymous: "Kamut Wheat Fettuccine Pasta", XP055539700, gefunden im www.gnpd.com Database accession no. 2165546
- DATABASE GNPD [Online] MINTEL; 19. September 2016 (2016-09-19), anonymous: "Stomach-Friendly Rye Bread", XP055539707, gefunden im www.gnpd.com Database accession no. 4293931
- DATABASE GNPD [Online] MINTEL; 12. März 2013 (2013-03-12), anonymous: "Whole Rye Cake", XP055540233, gefunden im www.gnpd.com Database accession no. 2019198
- REIJO LAATIKAINEN ET AL: "Pilot Study: Comparison of Sourdough Wheat Bread and Yeast-Fermented Wheat Bread in Individuals with Wheat Sensitivity and Irritable Bowel Syndrome", NUTRIENTS, Bd. 9, Nr. 11, 4. November 2017 (2017-11-04), Seite 1215, XP055539666, DOI: 10.3390/nu9111215
- C. G. RIZZELLO ET AL: "Highly Efficient Gluten Degradation by Lactobacilli and Fungal Proteases during Food Processing: New Perspectives for Celiac Disease", APPLIED AND ENVIRONMENTAL MICROBIOLOGY, Bd. 73, Nr. 14, 15. Juli 2007 (2007-07-15) , Seiten 4499-4507, XP055539589, US ISSN: 0099-2240, DOI: 10.1128/AEM.00260-07
- TILMAN J. SCHOBER ET AL: "Gluten-Free Sorghum Bread Improved by Sourdough Fermentation:? Biochemical, Rheological, and Microstructural Background", JOURNAL OF AGRICULTURAL AND FOOD CHEMISTRY, Bd. 55, Nr. 13, 1. Juni 2007 (2007-06-01), Seiten 5137-5146, XP055016988, ISSN: 0021-8561, DOI: 10.1021/jf0704155
- Hetty Van Den Broeck: "Wheat and Gluten Intolerance", , 1. März 2016 (2016-03-01), Seiten 1-44, XP055539448, Gefunden im Internet: URL:https://www.um-eatwell.nl/wow/docs/Bro eck,%20Gilissen,%20Brouns%202016%20Wheat%2 0and%20gluten%20Intolerance%20-%20science% 20and%20slolutions%20for%20the%20bakery%20 sector.pdf [gefunden am 2019-01-08]
- Renate Bonifer: "Glutensensitivität, Weizenallergie oder Zöliakie", Pädiatrische Gastroenterologie, 1. Januar 2016 (2016-01-01), Seiten 1-3, XP055539591, Gefunden im Internet: URL:http://www.swiss-paediatrics.org/sites /default/files/39-41_0.pdf [gefunden am 2019-01-09]
- RAITHEL MARTIN ET AL: "Non-allergic gluten sensitivity. A controversial disease - or not yet sufficiently explored?", BUNDESGESUNDHEITSBLATT - GESUNDHEITSFORSCHUNG - GESUNDHEITSSCHUTZ, SPRINGER BERLIN HEIDELBERG, BERLIN/HEIDELBERG, Bd. 59, Nr. 7, 20. Juni 2016 (2016-06-20), Seiten 821-826, XP035991023, ISSN: 1436-9990, DOI: 10.1007/S00103-016-2366-Z [gefunden am 2016-06-20]
- DATABASE GNPD [Online] MINTEL; 23 August 2017 (2017-08-23), anonymous: "Bread & Pizza Powder Mix", XP055539649, Database accession no. 5032651
- DATABASE GNPD [Online] MINTEL; 18 May 2017 (2017-05-18), anonymous: "Light Bread Mix with Golden Linseed", XP055539618, Database accession no. 4828393
- DATABASE GNPD [Online] MINTEL; 19 September 2016 (2016-09-19), anonymous: "Stomach-Friendly Rye Bread", XP055539707, Database accession no. 4293931
- J. Fränken ET AL: "Identification of Alpha-Amylase Inhibitor as a Major Allergen of Wheat Flour", INTERNATIONAL ARCHIVES OF ALLERGY AND IMMUNOLOGY, vol. 104, no. 2, 1 July 1994 (1994-07-01), pages 171-174, XP055530072, CH ISSN: 1018-2438, DOI: 10.1159/000236726
- DATABASE GNPD [Online] MINTEL; 19 September 2017 (2017-09-19), anonymous: "Gluten-Free Universal Baking Mix", XP055539640, Database accession no. 5105525
- DATABASE GNPD [Online] MINTEL; 10 July 2014 (2014-07-10), anonymous: "Fettuccine No. 28", XP055539697, Database accession no. 2534389
- DATABASE GNPD [Online] MINTEL; 12 March 2013 (2013-03-12), anonymous: "Whole Rye Cake", XP055540233, Database accession no. 2019198
- DATABASE GNPD [Online] MINTEL; 13 September 2013 (2013-09-13), anonymous: "Kamut Wheat Fettuccine Pasta", XP055539700, Database accession no. 2165546

## Beschreibung

Die vorliegende Erfindung betrifft das Gebiet der Lebensmittelerzeugung, insbesondere die Erzeugung und Bereitstellung von Backwaren und Broten, die trotz bekannter Lebensmittelunverträglichkeiten bekömmlich ist.

Es ist bekannt, dass ein erheblicher Prozentsatz der kaukasischen Bevölkerung an Lebensmittelunverträglichkeiten leidet, die durch den Verzehr von Getreideprodukten bedingt ist.

Eine Ausprägungsform hierbei ist die Zöliakie, auch bekannt als nichttropische oder einheimische Sprue oder glutensensitive Enteropathie. Zöliakie ist eine der Lebensmittelunverträglichkeiten bzw. Krankheit, bei welcher der Körper eines betroffenen Patienten auf Gluten, also z.B. die Gliadinfraktion des Weizens und/oder das Prolamin des Roggens (Secalin) und/oder das Hordein der Gerste immunologisch reagiert. Diese pathogene Reaktion auf Gluteneinnahme manifestiert sich in einer Entzündung des Dünndarms sowie eine Zerstörung des Darmwandepitels und führt damit zu einer mitunter lebensbedrohlichen Resorptionsstöru ng.

In neuerer Zeit hat sich weiterhin gezeigt, dass es eine weitere Ausprägungsform der von Getreiden ausgelösten Lebensmittelunverträglichkeitzu geben scheint, bei welcher der Patient auf eine Proteinklasse mit dem Namen Amylase-Trypsin Hemmer, welches im nachfolgenden Text als ATI abgekürzt wird, mit unspezifischen Darmbeschwerden reagiert. Dieses klinische Krankheitsbild wird inzwischen auch mit dem Schlagwort Weizensensitivität oder Nicht-Zöliakie-Glutensensitivität (eng.: *non-celiac glutensensitivity (*NCGS*)) bzw.* Nicht-Zöliakie-Weizensensitivität (eng.: *non-celiac wheat sensitivity* (NCWS)) oder auch ATI-Sensitivität bezeichnet. Schätzungsweise sind etwa 10% der kaukasischen Bevölkerung betroffen.

Es wird vermutet, dass die Anwesenheit von ATI in Getreidepflanzen, diese resistenter gegen Schädlingsbefall macht, und daher das Genprodukt über die Jahre der Züchtung in den modernen Getreiden begünstigt wurde. Weiterhin scheint ATI eine Rolle bei der Keimreifung zu spielen eine äußerst stabile 3D-Struktur zu haben, Protease resistent zu sein und selbst bei hohen Temperaturen (z.B. dem Brotbackvorgang) nur unvollständig zerstört zu werden. Weiterhin hat ATI die Eigenschaft die Verdauungsenzyme für Stärke und Eiweiß zu blockieren und somit auch selber nur unvollständig verdaut zu werden. Ohne an diese Hypothese gebunden zu sein, wird derzeit angenommen, dass eben dieses unverdaute ATI-Protein zu immunologischen oder entzündlichen Reaktionen im Darm führt oder bereits bestehende immunologische oder entzündliche Reaktionen verstärkt.

Ein durchschnittlicher, gesunder Erwachsener nimmt am Tag etwa 150-250 g Weizenmehl und damit 0,5-1 g ATIs zu sich. Bei dieser Aufnahmemenge und dem von Schuppan *et al.* (2015) vorgeschlagenen und beschriebenen Wirkmechanismus über die Stimulation des angeborenen Immunsystems, nämlich eine TLR4 Stimulation (Schuppan et al., 2015, Best Practice & Research Clinical Gastroenterology 29, pp469-476), ist für die meisten Menschen nicht mit dem Auftreten von Symptomen zu rechen. Da bislang noch keine Markerfüreine eindeutige Diagnose über NCGS verfügbar sind, bleibt dem Praktiker nur die Ausschlussdiagnose (Fasano et al., 2015, Gastroenterology; 148, 1195-1204).

Weiterhin ist die einzige derzeit zur Verfügung stehende Abhilfe, um eine NCGS oder - allgemeiner ausgedrückt - eine Unverträglichkeit, die durch ATI bedingt ist, zu kurieren, zu bessern oder zu beeinflussen, ein weitgehender Verzicht auf Weizenprodukte. Durch diesen Verzicht auf Weizen sind Patienten allerdings sehr eingeschränkt und nicht mehr in der Lage die gängigsten Lebensmittel aus Mehl, wie z.B. Nudeln, Brot und Backwaren zu verzehren. Sie sind oft gezwungen auf glutenfreie Produkte auszuweichen, obwohl nicht Gluten für ihre Beschwerden verantwortlich ist.

Es zeigt sich insbesondere auch, dass ATI-abhängige NCGS dosisabhängig ist, denn zahlreiche Patienten geben an, dass sie Dinkel, der geringere Mengen ATI enthält, besser vertragen. Gemäß einer weiteren Arbeitshypothese und vorläufiger Tierdaten, begünstigt die Aufnahme von ATI auch vermehrt andere Autoimmunerkrankungen bzw. Krankheiten mit chronischen Entzündungsverläufen (Schuppan et al., 2015, Best Practice & Research Clinical Gastroenterology 29, pp469-476).

Um die Bedürfnisse von Betroffenen und NCGS Patienten besser zu bedienen und ihnen ein größeres Spektrum an möglichen Lebensmitteln bereit zu stellen, besteht das Bedürfnis einen Weg zu finden ATI-freie oder ATI-reduzierte Weizenprodukte bereitzustellen.

WO2015/168416 befasst sich mit der Reduktion des ATI Gehalts in Lebensmitteln und beschreibt neben quantitative Nachweisverfahren für ATI aus Mehlen und Backwaren, u.a. mittels biologischer Testsysteme (Bioassays), die relevante biologische Aktivität erfassen, auch ein Extraktionsverfahren, bei welchem Lebensmittel mit einem Extraktionspuffer behandelt werden und durch diesen Puffer das ATI aus dem Lebensmittel herausgelöst bzw. reduziert werden soll.Fermentation wird ein positiver Einfluss auf die Reduktion des ATI Gehalts zugerechnet. Beispiele in Teig und Brot werden aufgeführt. Allerding erfordert besagtes Extraktionsverfahren ein vollständiges Prozessieren und damit eine vollständige Proteinzersetzung, so dass die behandelten Rohstoffe nur selten für eine industrielle oder lebensmitteltechnische Weiterverarbeitung geeignet sind.

Weiterhin ist zu erwähnen, dass WO2011/137322 zunächst ein Verfahren bei welchem ATI mittels eines spezifischen Antikörpers aus einer wässrigen Lösung einer Substanz bestimmt und gemessen werden kann, beschreibt. WO2011/137322 liefert damit die Voraussetzung Lebensmittel oder auch prozessierte Lebensmittel auf die Anwesenheit von ATI zu untersuchen.

EP 11 775 619.7 beschreibt weiterhin ein enzymatisches Abbauverfahren zu Entfernung von ATIs, durch den Einsatz von Disulfid-reduzierenden Mikroorganismen. Auch ein solches Verfahren führt bei der Behandlung von Weizenmehlen jedoch zu Zusammensetzungen, die jegliche Eigenschaften eines Mehles und damit jegliche Eignung zur Herstellung von Brot oder Backwaren verloren haben.

Es besteht daher weiterhin ein Bedarf verbesserte Aufreinigungsverfahren zu entwickeln, die es erlauben Ausgangssubstanzen schonend zu behandeln, sowie der Bedarf alternative Zusammensetzungen bereitzustellen, mit welchen die Herstellung von qualitativ hochwertigen ATI-freien und/oder ATI-reduzierten Lebensmitteln, insbesondere von Brot oder Backwaren, ermöglicht wird.

Während man bislang annahm, dass eine ATI-abhängige NCGS dosisabhängig ist, konnten die Erfinder mit der, der Erfindung zugrundeliegende Mehlmischung die Hypothese bestätigen, dass NCGS abhängig vom ATI-Typ sein könnte und Produkte in denen nur einzelne ATIs reduziert sind bereits eine bessere Verträglichkeit zeigen.

Derzeit sind derzeit 17 verschiedenen genotypische ATIs beschrieben, von welchen im Rahmen der Anmeldungjedoch nur die Nachfolgenden identifiziert und/oder beschrieben werden; ATI 0.19, ATI 0.28, ATI 0.53 und ATI CM3, ATI CM2, ATI CM16 und ATI CM17. Die verschiedenen Typen der ATI werden dabei anhand von massenspektrometrischen Daten und den auffindbaren Spaltpeptiden im Liquid-Chromatographie-Massenspektometrie/Massenspektometrie Verfahren (LC-MS/MS Verfahren) identifiziert und quantifiziert.

Für die Bereitstellung der erfindungsgemäßen Mehlmischung und der hieraus abgeleiteten Teigwaren oder Backwaren wurden dabei bestimmte ATI-reduziert Ausgangsprodukte ausgewählt und auf ihre ATI Zusammensetzung bzw. ATI Gehalt überprüft. Insbesondere wurden Protein- und Stärkequellen sowie vorbehandelte Mehle ausgewählt, in denen durch z.B. hydrolytische Behandlung bzw. durch enzymatische Behandlung der Gesamt-ATI-Gehalt oder auch der Gehalt einzelner ATIs reduziert worden war.

Im Stand der Technik sind zahlreiche enzymatische und hydrolytische Verfahren bekannt, um Mehle und insbesondere Getreideproteine, wie z.B. Gluten zu behandeln (Zusammenstellung in: Day et al., 2006 Trends in Food Science 17, 82-90). Es hat sich gezeigt, dass insbesondere eine Behandlung der Proteinquellen mit Säuren oder Laugen (nach Batey et al, 1981 (J Food Technology, 16(5), 561-566); Wu et al, 1976 (J Agricultural and Food Chemistry, 24(3), 504-510)) und dadurch eine Reduzierung der zahlreichen Glutamin Reste, die Gesamtprotein-Zusammensetzung des Mehls verändert und ein verstärktes Auswaschen niedrig molekularer Polypeptide ermöglicht.

Hierbei wird das zu behandelnde Mehl oder die Protein- und Stärkequellen zunächst mit leicht salzigen Lösungen für 2-4 Stunden eingeweicht, dann enzymatisch z.B. mit Protease oder mikrobiell z.B. mit Lactobacillen, die in der Lage sind Disulfidbrücken aufzubrechen, behandelt. Die vorbehandelte Lösung wird dann zum auftrennen der Proteine zentrifugiert. Leichte und globuläre Proteine, wie z.B. alle oder auch einzelne ATIs, können dabei separiert werden. Der Restliche Ansatz wird dann getrocknet und als Mehl mit verändertem Proteingehalt bzw. Proteinzusammensetzung weiterverarbeitet.

Die Erfinder konnten zeigen, dass derart vorbehandelte Mehle und Proteinquellen auch eine deutliche Verschiebung der ATls aufweisen und insbesondere, dass die Reduktion einiger ausgewählter ATIs sich vorteilhaft auf Personen auswirkt, die allgemeine Unverträglichkeitsreaktionen und/oder Krankheitssymptome beim Genuss von Weizenprodukten zeigen. Dabei fanden die Erfinder, dass insbesondere Mehlmischungen mit einem reduzierten Gehalt an ATI 0.19 und/oder ATI 0.28 und hieraus erzeugte Teigwaren und Backwaren von Patienten mit NCGS bevorzugt werden und zur Linderung von ATI-induzierten Beschwerden beitragen können.

Die vorliegende Erfindung stellt daher eine Mehlmischung gemäß Anspruch 1 bereit, die sich durch einen erheblich reduzierten Gehalt an ATI 0.19 und/oder ATI 0.28 im Vergleich zu herkömmlichen Weizenmehlen (Typ 550) auszeichnet. In der erfinderischen Mehlmischung ist dabei der Gehalt an ATI Typ 0.19 und/oder ATI Typ 0.28 um wenigstens 40% im Vergleich zu Weizenmehl des Typ 550 oder auch eines herkömmlichen Mehls reduziert und wobei die wenigstens eine Proteinquelle ausgewählt ist aus der Gruppe enthaltend Getreidekleberprotein, isoliertes Weizengluten, isolierte Glutenvarianten aus Dinkel, Roggen, Gerste, Emmer, Hafer oder Einkorn, isolierte Glutenbestandteile sowie Mischungen derselben und wobei zusätzlich wenigstens ein oder mehrere Backzusätze zugegeben werden, welche ausgewählt werden aus der Gruppe enthaltend Sauerteig, Sauerteigkonzentrat und/oder getrockneter Sauerteig.

Weiterhin ist es vorteilhaft auch die ATIs CM3 und CM16 beides sehr aktive Immunstimulatoren zu reduzieren bzw. den Gehalt zu kontrollieren.

Das Referenzmehl "Weizenmehl des Typs 550" ist definiert gemäß der deutschen DIN-Norm 10355.

Analytische Messungen des allgemeinen und des speziellen ATI-Gehaltes, insbesondere des Gehaltes an ATI 0.19 oder ATI 0.28, erfolgen im Rahmen der vorliegenden Erfindung mittels LC-MS/MS aus enzymatisch hydrolysierten Extrakten des zu vergleichenden Mehls bzw. der Mehlmischung, sowie eines Abgleichs der experimentell erzeugten MS-Daten mit publizierten Werten aus Datenbanken über den Gesamt ATI-Gehalt in Dinkel, Roggen, Hartweizen, Gerste, Weichweizen, Einkorn, Emmer und Hafer.

Die Erfinder haben dabei herausgefunden, dass insbesondere Mehlmischungen, welche aus einer isolierten ATI-reduzierten Protein- und Stärkequelle bestehen - welche optional Hydrokolloide erhalten - wobei die Mehlmischungen welche insbesondere bezüglich des Gehaltes von ATI 0.19 und/oder ATI 0.28 um wenigstens 40% im Vergleich zu herkömmlichem Mehl und weiterhin auch CM3 und CM16 reduziert sind, zur Herstellung von Brot und Brot-ähnlichen Backwaren eigenen.

Derartige Mehlmischungen zeigen eine reduzierte Bioaktivität, und wie durch Messungen im Bioassay bestätigt wurde, eine zum Teil um einen Faktor 6 reduzierte entzündliche Bioaktivität.

Als Mehlmischung wird gemäß der vorliegenden Erfindung jede Zusammensetzung bezeichnet, die auf vermahlenen Pflanzenteilen gemäß Anspruch 1, insbesondere vermahlene Pflanzensamen beruht.

Der Ausmahlgrad der beschriebenen Mehlmischung kann dabei von Typ 405, einem typischen Haushaltsmehl für Kuchen, über Typ 550 für Brot bis zu Typ 1700, einem Weizenmehl, das fast einem Vollkornmehl entspricht. Gleiches gilt für Roggen und Dinkel. Der Begriff "Ausmahlgrad" bezeichnet dabei den "Typ" des Mehls, und erläutert dem Fachmann unmissverständlich den in der DIN-Norm 10355 festgelegten Eigenschaften, nämlich z.B. wie viel von den äußeren Randschichten des Korns und damit vom Mineralstoffgehalt im Mehl enthalten sind. Die Typezahl gibt an, wie viel Milligramm Mineralstoff (sogenannte Aschezahl) in 100 Gramm Mehl enthalten sind. Je höher die Typezahl, desto höher der Mineralstoffgehalt und dunkler das Mehl.

Neben dem Ausmahlgrad ist auch derVermahlungsgrad der Pflanzenteile in der hierin beschriebenen Mehlmischung von Interesse und drückt sich in verschiedenen Korngrößen aus. Typischerweise, wird in der in der Anmeldung beschriebenen Mehlmischung Mehl mit einer mittleren Korngröße von bis zu 150 µm eingesetzt. Zur Erzeugung von Backwaren und Broten, wie hierin beschrieben, hat die Mehlmischung einen Vermahlungsgrad mit einer durchschnittlichen Korn- bzw. Partikelgröße von <1000 µm, weiterhin von <750 µm, geeignet sind weiterhin besonders Mehlmischungen mit einem Vermahlungsgrad von <500 µm, weiterhin von <400 µm, weiterhin von < 300 µm, und schließlich für Spezialmischungen insbesondere von < 150 µm.

Um eine standardisierte Analyse zur Bestimmung des ATI-Gehaltes der erfinderischen Mehlmischung mit einem reproduzierbaren Vergleichswert durchzuführen, wird ein Standard-Weizenmehl mit Ausmahlgrad Typ 550 herangezogen.

Das für die beschriebene Mehlmischung eingesetzte Mehl kann sich dabei auch aus isolierten Protein- und Stärkequellen zusammensetzen. Gemäß einer Ausführungsform enthält die beschriebene Mehlmischung wenigstens 5 Gew.% und bis zu 25 Gew.% Protein, vorranging Kleberproteine. Weiterhin, gemäß weiterer Ausführungsformen enthält die erfindungsgemäße Mehlmischung5-20 Gew.% Protein oder 5-15 Gew.% Protein, vorzugsweise 8-18 Gew.% Protein, alternative 7-25 Gew.% Protein, 10-25 Gew.% Protein oder 15-25 Gew.% Protein, weiter vorzugsweise enthält die erfindungsgemäße Mehlmischung 6-19 Gew.% Protein oder 10-14 Gew.% Protein.

Wobei insbesondere darauf hinzuweisen ist, dass besagte Proteinquellen glutenhaltig sein dürfen, wenn auch nicht sein müssen. Weiterhin ist anzumerken, dass im Rahmen der Erfindung Gluten oder Kleberprotein ein Sammelbegriff ist und für ein Stoffgemisch aus verschiedenen Proteinen, die im Samen einiger Arten von Getreide vorkommen, steht, wobei dieser Sammelbegriff auch alternative die Proteinquelle, gemäß der vorliegenden Anmeldung bezeichnet.

Entsprechend wird gemäß weiterer Ausführungsformen die eingesetzte Proteinquelle aus der Gruppe enthaltend aus Dinkel-, Weizen-, Roggen-, Gersten-, Hafer-, Emmer- oder Einkornmehl, sowie isolierten Getreideklebervarianten, isoliertem Weizengluten, isolierten Glutenvarianten aus Dinkel, Weizen, Roggen, Gerste, Hafer, Emmer oder Einkorn aber auch isolierte Glutenbestandteile aus Dinkel, Weizen, Roggen, Gerste, Hafer, Emmer oder Einkorn sowie Mischungen der voran genannten ausgewählt.

Alternative gemäß anderer Ausführungsformen ist die Proteinquelle glutenfrei und die Mehlmischung wird durch den Einsatz und das Vermahlen von Pseudogetreiden oder anderen glutenfreien, proteinreichen Quellen ausgewählt aus der Gruppe enthaltend Amarant, Quinoa, Chia, Buchweizen, Reis, Mais, Hirse, Teff, Leinsamen, Hülsenfrüchten, Kastanien und Mischungen derselben erzeugt.

Gemäß weiterer Ausführungsformen dürfen auch, müssen aber nicht, die der Mehlmischung zugesetzten Stärkequellen glutenhaltig sein.

Entsprechend wird gemäß solcher Ausführungsformen die eingesetzte Stärkequelle ausgewählt aus der Gruppe enthaltend Weizenstärke, Weichweizenstärke und Hartweizenstärke, sowie eine Mischung aus Weizenstärke und wenigstens einer weiteren Stärkequelle nämlich Maisstärke, Kartoffelstärke, Tapiokastärke, hydrolysierte Stärke, Roggenstärke, Haferstärke, Gerstenstärke, Pfeilwurzstärke, Bananenstärke, Reisstärke oder Mischungen derselben.

Gemäß einer Ausführungsform enthält die beschriebene Mehlmischung wenigstens 50 Gew.% und/oder bis zu 96 Gew.% Stärke. Weiterhin, gemäß weiterer Ausführungsformen enthält die erfindungsgemäße Mehlmischung55-90 Gew.% Stärke, 65-85 Gew.% Stärke, 75-85 Gew.% Stärke, 70-92 Gew.% Stärke, 60-85 Gew.% Stärke oder 80-96 Gew.% Stärke.

Die Erfinder konnten dabei zeigen, dass Teige, welche mit ATI-reduzierten Protein- und Stärkequellen erzeugt werden, in Abhängigkeit ihrer Zusammensetzung gute bis hervorragende Elastizität und Viskosität zeigen. Zum Beispiel ein Proteinanteil von 5-15 Gew.% zusammen mit einem Stärkeanteil von 70-92 Gew.% oder über 80 Gew.% führt zu Teigen mit Teigeigenschaften, welche denen mit Standard Mehl Typ 550 vergleichbar sind (Beispiel 1).

Es hat sich weiterhin gezeigt, dass die gewünschten Effekte einer besseren Verträglichkeit, bereits bei einer ATI-Reduktion von wenigstens 40% im Vergleich zu unveränderten Normalprodukten, nämlich einem Standard Weizenmehl Typ 550, auftreten. Daher ist die erfindungsgemäße Mehlmischung dadurch gekennzeichnet, dass die eingesetzten Ausgangsprodukte und das Endprodukt, also die Mischung an sich, eine ATI-Reduktion von wenigstens 40% im Vergleich einem Standard Weizenmehl Typ 550 aufweisen.

Weiterhin gemäß alternativer Ausführungsformen, weisen die eingesetzten Ausgangsprodukte und das Endprodukt eine ATI-Reduktion von wenigstens 50% im Vergleich einem Standard Weizenmehl Typ 550, weiterhin von wenigstens 60% im Vergleich einem Standard Weizenmehl Typ 550, weiterhin von wenigstens 70% im Vergleich einem Standard Weizenmehl Typ 550, weiterhin von wenigstens 80% im Vergleich einem Standard Weizenmehl Typ 550, weiterhin von wenigstens 90% im Vergleich einem Standard Weizenmehl Typ 550 oder auch von 100% im Vergleich einem Standard Weizenmehl Typ 550 auf.

Ein wesentliches Merkmal der vorliegenden Erfindung ist der Einsatz von ATI-reduzierten Ausgangssubstanzen. ATI wird im Rahmen der vorliegenden Anmeldung als Abkürzung und Sammelbezeichnung für eine Untergruppe der Weizenproteine, nämlich die Familie der alpha-Amylase/Trypsin-Inhibitoren verwendet. Die derzeit bekannte Familie der ATIs besteht aus 17 unterschiedlichen Proteinvarianten mit einem Molekulargewicht von ca. 15kD. ATIs sind kompakte, wasserlösliche Proteine bestehend aus mehreren hoch konservierten, über Disulphidbrücken-verbundenen alpha-Helixstrukturen und zeichnen sich weiter durch eine hohe Proteaseresistenz aus. Typischerweise finden sich in glutenhaltigen Nahrung oder direkt im isolierten Gluten ein Anteil von ca. 2-4 % ATI-Proteinen.

Die Erfinder konnten zeigen, dass insbesondere der Einsatz von Ausgangssubstanzen mit einem reduzierten Anteil einiger ausgewählter ATIs besonders vorteilhaft ist. So sind erfindungsgemäß Ausgangssubstanzen mit einem reduzierten ATI Gehalt, insbesondere einen reduzierten ATI Gehalt ausgewählt aus den ATIs bestehend aus der Gruppe ATI 0.19, ATI 0.28, CM3, CM16 und CM17 zu bevorzugen.

Die im Rahmen der vorliegenden Erfindung eingesetzten Mehle oder anderen Ausgangssubstanzen werden daher auf den Gehalt der ausgewählten ATIs getestet. So werden gemäß einiger Ausführungsformen Mehle und Ausgangssubstanzen eingesetzt, die aufgrund eines natürlich vorkommend niedrigen oder eines industriell reduzierten ATI 0.19 Gehalt und/oder ATI 0.28 Gehaltes ausgewählt wurden. Weiterhin kann aber auch durch verschiedene vorbekannte Verfahren der ATI Gehalt reduziert werden, so dass dann Ausgangssubstanzen mit einem reduzierten ATI 0.19 Gehalt und/oder ATI 0.28 Gehalt vorliegen.

Zur Messung des ATI Gehaltes sind verschiedene Verfahren bekannt. Prandi et al., (Food Chemistry 2013, 141-146) beschreibt z.B. die LC/MS Analyse zur Bestimmung des ATI CM3 Gehaltes. Mit der Abkürzung LC/MS (oft auch als HPLC-MS bezeichnet) ist die Kombination aus Flüssigchromatographie mit Massenspektometrie-Kopplung gemeint. Um die Moleküle einer Lösung zu trennen wird dabei eine Chromatographie bzw. eine Flüssigchromatographie durchgeführt und anschließend die getrennten Substanzen (Moleküle) durch eine Massenspektometrie identifiziert und/oder quantifiziert werden.

Eine der Schwierigkeiten des LC/MS Verfahrens ist jedoch die Schnittstelle zwischen den beiden einzelnen Verfahren. Sowohl überschüssiges Probenvolumen als auch das Lösungsmittel müssen nämlich entsorgt werden, wobei dies häufig Verschmutzungen und Defekte im Interface verursacht. Um diese Probleme zu überwinden werden deshalb öfters im Ionisierungsverfahren heutzutage Elektrospray-Ionisation (ESI) oder chemische Ionisation bei Atmosphärendruck (APCI) eingesetzt. Eine weitere Möglichkeit, die im Rahmen der vorliegenden Erfindung auch genutzt werden kann, ist eine nano-LC/MS wobei in diesem Fall das Probenvolumen vermindert wird und die Auftrennung mit einer deutlich geringeren Flussrate vollzogen wird.

Das Verfahren, dass sich im Rahmen der Erfindung am besten bewährt hat, ist jedoch die doppelte Koppelung der Massenspektometrie mit der Flüssigkeitschromatographie auch LC-MS/MS genannt, womit eine bessere und aussagekräftigere Untersuchung der präsenten Substanzen durchgeführt werden kann. Diese Methode ist heutzutage in der Forschung sehr verbreitet, besonders in den Disziplinen der Proteomik und Pepdidomics, denn mit dem LC-MS/MS Verfahren ist es möglich nicht nur reine Substanzen, sondern auch Substanzen in Substanzgemische zu identifizieren und zu quantifizieren.

Es ist hierbei jedoch nötig, die zu analysierenden Proben Zeitaufwendig vor zu präparieren. Die nachfolgend beschriebenen Methoden zur Vorbereitung einer Probe, die anschließend einen LC-MS/MS Verfahren unterzogen wird, sind alle Teil des bekannten Stands der Technik, und können alle, alleine oder in Kombination, für die Analyse im Rahmen der vorliegenden Anmeldung verwendet werden.

Eine der bekanntesten Methoden ist die ein- oder zweidimensionale (1D oder 2D) polyacrylamide Gelelectrophorese (PAGE), wobei die Proteine aus dem Gel als proteolytischen Fragment extrahiert und anschließend durch ein MS-Verfahren analysiert werden.

Die (PAGE) Methode ist sehr robust und stabil jedoch ist sie wegen der schwachen Auflösung teils ungeeignet für komplizierte Mischungen. Aus diesem Grund wird daher heutzutage oft auch eine gelfreie Trennung durchgeführt, wobei anstatt des Gels eine pH-Lösung benutzt wird, um die Trennung der Peptide durchzuführen. Die Proteine und Peptide werden auf einen pH-gradienten (IPG) Gel immobilisiert, dann mittels Migration separiert und durch Diffusion auf eine Vertiefung neben dem IPG-Streifen orientiert.

Alternativ zu den oben genannten Verfahren, werden Proteine oft basierend auf deren biochemischen und biophysischen Eigenschaften getrennt, dabei wird die (Immun-) Affinität Chromatographie verwendet, wobei das Protein, welches am meisten präsent ist, entfernt wird. Typischerweise wird die hierzu eine auf Farbstoff basierte Abtrennung oder eine Abtrennung mittels Antikörper durchgeführt.

Des Weiteren gibt es noch zahlreiche weitere Methoden, die geeignet sind, um die Ausgangssubstanzen und Mehle im Rahmen der vorliegenden Erfindung zu analysieren, solche werden allerdings hier nur kurz erwähnt:
Ultrafiltration kann vorgeschaltet werden und trennt durch Zentrifugation die Gesamtproteine in mehrere Fraktionen auf.

Organische Lösungsmittel-präzipitation, hierbei werden durch das Hinzufügen von einem organischen Lösungsmittel die Proteine mit höher molekularer Masse präzipitiert und hinterlassen in der Lösung die niedermolekularen Proteine, inklusive aller Peptide. Es ist auch möglich Ammoniumsulfat anstatt dem organischen Lösungsmittel zu benutzten, jedoch kann dies in einem späteren LC-MS/MS Schritt zu Kontamination des Interface führen.

Neben der oben erwähnten HPLC-Flüssigchromatographie sind auch alternative Methoden einsetzbar, wobei diese z.B. die Folgenden umfassen:
Gel-Permeations-Chromatographie (GPC) als eine Art der Flüssigchromatographie, bei die einzelnen Moleküle gelöster Stoffe aufgrund ihrer Größe (genauer: ihres hydrodynamischen Volumens) getrennt werden.

Umkehrphasen-Chromatografie, wobei die einzelnen Moleküle basierend auf deren unterschiedlichen hydrophoben Eigenschaften getrennt werden.

Ionenaustauschchromatographie, die Proteine in einer spezifischen Salzumgebung und mit einem spezifischen pH-Wert, basierend auf deren Ladung auftrennt.

Bei komplexen biologischen Proben sind häufig mehrere multidimensionale Trennung angezeigt, wobei alle oben beschriebenen Methoden kombiniert werden können. All diese Verfahren und Kombination dieser Verfahren sind Bestandteil des Stands der Technik und können verwendet werden, um im Rahmen der Erfindung die geeigneten Ausgangssubstanzen und Mehle mit reduziertem ATI Gehalt auszuwählen.

Die Ausgangssubstanzen gemäß der vorliegenden Erfindung haben einen deutlich reduzierten Gehalt an ATI. Insbesondere weisen die Ausgangssubstanzen und Mehlmischungen gemäß der vorliegenden Erfindung einen reduzierten Gehalt an ATI 0.19 und/oder ATI 0.28 auf, während der Gehalt für andere ATIs auch nahezu unverändert ist oder sein kann.

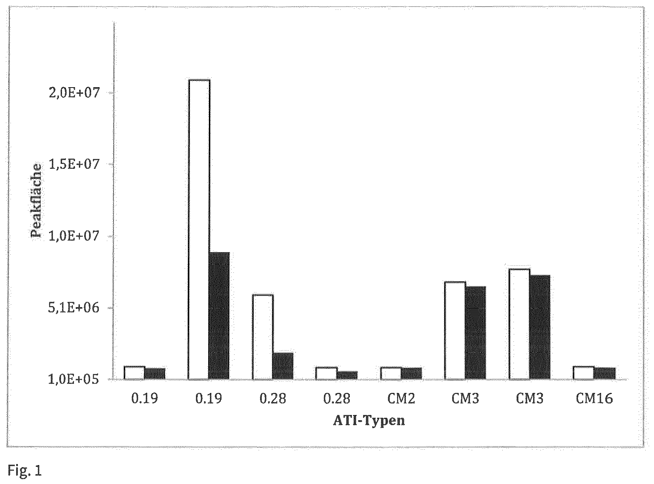

Hierzu sei verwiesen auf das Beispiel 9, in welchem der ATI Gehalt verschiedener ATIs mittels LC/MS+MS für eine erfindungsgemäße Mehlmischung im Vergleich zu Standardmehl ermittelt wurde (Figur 1).

Weitere Untersuchungen zeigten, dass die Bioaktivität des in der erfindungsgemäßen Mehlmischung enthaltenen ATIs sich deutlich von der ATI-induzierten Bioaktivität eines Standardmehls unterscheidet.

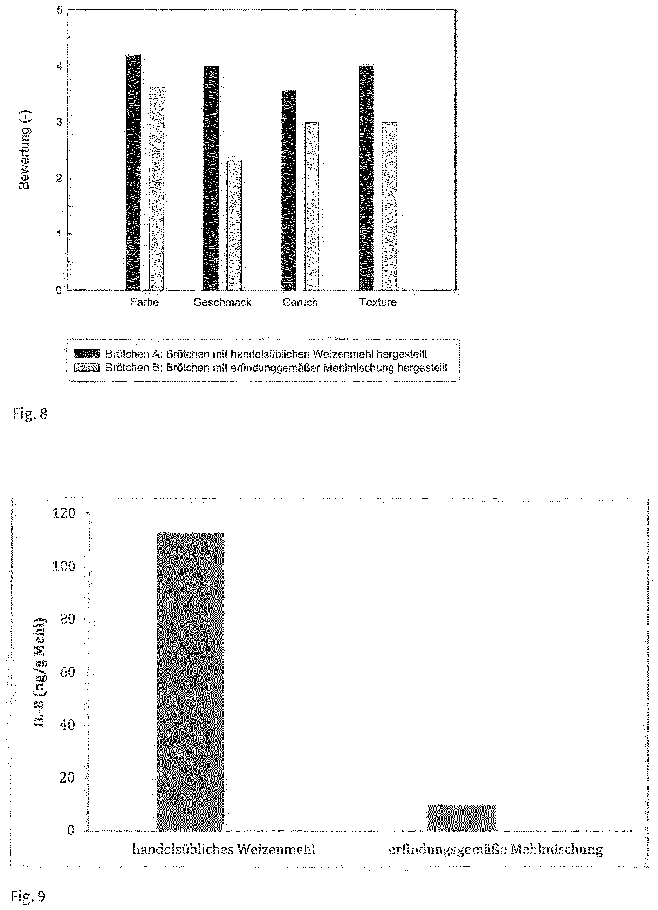

Figur 9 zeigt z. B. das Ergebnis eines IL8 spezifischen ELISA Assay, für welchen geeignete Testzellen, nämlich ATI-reaktive Zellen - gemäß WO2017075456 z.B. TLR4-exprimierende Zellen, vorzugsweise TLR4-exprimierene Monocyten - mit ATI Extrakten (Pufferextraktion) in Kontakt gebracht werden und anschließend im Überstand die Cytokine Freisetzung, nämlich eine IL8 Freisetzung mittels ELISA gemessen wird. Junker *et al.,* hat diesen Bioaktivitätstest entwickelt und erstmals beschrieben in Junker et al., (Wheat amylase trypsin inhibitors drive intestinal inflammation via activation of toll-like-receptor, Journal Experimental Medicine 201, 209: 2395-2408).

Die Erfinder konnten dabei zeigen, dass die erfindungsgemäße Mehlmischung im Vergleich mit einem Standardmehl eine deutlich niedrigere Zytokin-Ausschüttung im ATI-Bioaktivitätstest auslöst und somit Patienten, die ATI-sensitive sind und die ggf. verschiedene NCGS Symptome zeigen, eine deutlich bessere Verträglichkeit und Bekömmlichkeit von Produkten hergestellt aus der erfindungsgemäßen Mehlmischung erwarten können, da mit keinen ATI-induzierten Immunologischen oder allergischen Reaktionen zu rechnen ist.

Gemäß einer weiteren Ausführungsform zeigt die ATI Bioaktivitätsmessung einer erfindungsgemäßen Mehlmischung eine Bioaktivität aufweist, die einer IL8 Ausschüttung von zwischen etwa 10 gegenüber etwa 115 ng IL-8 pro Gram der Mischung entspricht und im IL-8 spezifischen ELISA Assay nachweisbar ist.

Es zeigt sich weiterhin, dass nicht alle ATIs reduziert sein müssen um den positiven Effekt bezüglich der Backeigenschaften und der besseren Verträglichkeit zu erreichen. Es ist nicht schädlich, jedoch auch nicht erforderlich, dass andere außer ATI 0.19 oder ATI 0.28 reduziert sind, um das allgemeine Ziel der vorliegenden Erfindung, nämlich eine Mehlmischung geeignet zur Herstellung von Broten und Backwaren, oder Produkten mit besserer Verträglichkeit für Patienten allgemein und insbesondere für Patienten mit Nicht-Zöliakie-Glutensensitivität bereitzustellen.

Weitere Untersuchungen zeigten, dass in der erfindungsgemäßen Mehlmischung und durch die enzymatische oder hydrolytische Vorbehandlung der Mehle auch der Anteil der natürlicherweise im Mehl vorhandenen Fructooligosaccharide (FODMAP), nämlich der fermentierbare Oligo-, Di-, Monosaccharide bzw. Polyole deutlich reduziert ist. In Standardmessungen konnte gezeigt werden, dass der Anteil an FODMAPs in der erfindungsgemäßen Mehlmischung um einen Faktor 10 im Vergleich mit handelsüblichem Weizenmehl reduziert ist (Beispiel 10).

Die erfindungsgemäße Mehlmischung ist somit zusätzlich äußerst verträglich für Patienten, die eine erhöhte Sensitivität für das Vorliegen von Oligosacchariden im Allgemeinen (FOS, XOS, oder GOS) und weiterhin von FODMAPs, insbesondere von bakteriell fermentierbaren Oligo-, Di-, Monosacchariden oder Polyolen aufweisen.

Die erfindungsgemäße Mehlmischung ist weiterhin besonders interessant, da sie trotz des reduzierten ATI Gehaltes und damit einhergehend einem veränderten Getreideproteingehaltes, besonders zur Herstellung von Backwaren und Broten geeignet ist.

In verschiedenen Versuchsreihen, konnten die Erfinder zeigen, dass und wie sich verschiedene Zusammensetzungen der Mehlmischung, bzw. verschiedene Protein- oder Stärkeanteile der Mehlmischungen, auf die Teigeigenschaften und insbesondere auf die Elastizität, Teigviskosität, Dehnbarkeit und Knetverhalten auswirken (Beispiel 1-4).

In zahlreichen weiteren Versuchsreihen wurde der Einsatz von Hydrokolloiden und weiteren Backzusätzen sowie deren Auswirkungen auf die Teigeigenschaften, des mit der erfindungsgemäßen Mehlmischung hergestellten Teiges, untersucht (Beispiel 4-6).

Entsprechend konnte gezeigt werden, dass gemäß weiterer Ausführungsformen die erfindungsgemäße Mehlmischung - optional - ein oder mehrere Hydrokolloide enthalten kann. Typischerweise werden hierzu das eine oder die mehreren Hydrokolloide ausgewählt aus der Gruppe enthaltend Psyllium, Guarkernmehl, Chiasamenmehl, Leinsamenmehl, Xanthan, Traganth, Konjac, Gummi Arabikum, Karaya, Sonnenblumenkernmehl und HPMC (HydroxyPropyl-Methyl-Cellulose).

Die erfindungsgemäßen Mehlmischungen enthalten gemäß einer weiteren Ausführungsformen bis zu 3% Gewichtsprozent eines oder mehrerer Hydrokolloide. Gemäß weiterer Ausführungsformen enthält die erfindungsgemäße Mehlmischung zwischen 0 und 0,5 Gew.% bzw. zwischen 0 und bis zu 1 Gew.% an Hydrokolloiden, weiter bis zu 2 Gew.% an Hydrokolloiden, weiterhin bis zu 3 Gew.% an Hydrokolloiden.

Die Hydrokolloide erhöhen und verbessern bei mäßigem Einsatz die Teigeigenschaften und insbesondere die viskosen Teigeigenschaften, die im Farinograph bei der Analyse des Knetverhaltens ermittelt und verglichen wurden (Beispiel 5).

Weiterhin beeinflussen die Hydrokolloide die Gasrückhalteeigenschaften und damit auch die Volumenausbeute der Backwaren. In jedem Fall kann hierin aber festgehalten werden, dass der Zusatz an Hydrokolloiden nicht nötig, jedoch auch nicht schädlich und teilweise wünschenswert ist, um ein Endprodukt einzustellen, welches einem Weizenbrot vergleichbar ist.

Weiterhin, konnte gezeigt werden, dass gemäß weiterer Ausführungsformen die erfindungsgemäße Mehlmischung - optional - ein oder mehrere Backzusätze enthalten kann. Typischerweise werden hierzu das eine oder die mehreren Backzusätze ausgewählt aus der Gruppe enthaltend Ascorbinsäure, Malzmehle, Amylasen, Xylanasen, Proteasen, Lipasen, Lipoxygenasen, Glucoseoxidase, Cellulasen, Hemicellulasen, Lecithine, Phosphate, Mono-und Diglyceride von Speisefettsäuren, Emulgatoren, Cystein, und Mischungen derselben, sowie weiterhin enthaltend Backtriebmittel und Hefe.

Die der Mehlmischung zugesetzten Backzusätze haben dabei lediglich die Aufgabe die herzustellenden Backwaren bezüglich Ihrer Bräunung, Volumenentwicklung oder Geschmacksabstimmung bzw. Geschmacksentwicklungzu beeinflussen und einem Weizenbrot in höchster Form ähnlich oder vergleichbar zu machen. Andere dem Fachmann bekannte oder übliche Backzusätze können der Mehlmischung zugemischt werden, ohne den erfinderischen Kern und die erwünschte Verträglichkeit zu verändern.

In Geschmacksverkostungen wurde daher auch ermittelt, ob die mit der erfinderischen Mehlmischung hergestellten Backwaren eine entsprechende Vergleichbarkeit zu herkömmlichen Weizenbroten aufweisen. Hierzu wurden aus derVersuchsmischung 17 (erfindungsgemäße Mischung) und derVersuchsmischung 1 (handelsübliches Weizenmehl) Brötchen und Brote hergestellt und von Testern verkostet und vergleichen. Bewertet wurden hierbei der optische Eindruck (Färbung und Erscheinungsbild), Geruch und Aroma, Geschmack sowie Textur und Haptik.

Im Ergebnis zeigt sich, dass die Tester zwar unterschiedliche Bewertungen abgeben und insbesondere bezüglich des Geschmack Unterschiede wahrgenommen werden konnten, allerdings zeigt sich auch, dass im Gesamteindruck die aus Standardmehl bzw. dem ATI-reduzierten Mehlmischung hergestellten Produkte hochgradig ähnlich und vergleichbar sind (Figur 8).

Gemäß weiterer Ausführungsformen wird die ATI-reduzierte Mehlmischung mit Sauerteig, Sauerteigkonzentrat, Backzusätzen und/oder Backtriebmitteln versetzt. Die eingesetzten Sauerteige oder Sauerteigkonzentrate enthalten hierzu einen oder mehrere Stämme bzw. Reinzuchtstämme aus der Gruppe der Mikroorganismen enthaltend *L. acidifarinae, L. acidophilus, L. alimentarius, L. amylovorus, L. brevis, L. buchneri, L. cellobiosus, L. coleohominis, L. collinoides, L. crispatus, L. crustorum, L. curvatus, L. delbrueckki, L. forciminis, L. fermentum, L. fructivorans, L. frumenti, L. gallinarum, L. gasseri, L. hammesii, L. helveticus, L. hilgardii, L. homohiocchi, L. johnsonii, L. kefiri, L. kimchi, L. kunkeei, L. linderi, L. mali, L. mindensis, L. mucosoe, L. nagelii, L. nontensis, L. namurensis, L. nodensis, L. oris, L. panis, L. paralimentarius, L. parabuchneri, L. paracasei, L. pentosus, L. perolens, L. plantarum, L. pontis, L. reuteri, L. rossiae, L. sakei, L. sanfranciscensis, L. secaliphilus, L. siliginis, L. spicheri, L. vaginalis, L. zymoe, u.a. Lactococcus lactis, Leuconostoc citreum, L. gelidum, Lc. mesenteroides, Pediococcus acidilactici, Pediococcus domnosus, P. parvulus, P. pentosaceus, Weissella cibaria, Weissella confuso, Weissella kandleri, Weissella paramesenteroides, Weissella viridescens, Candida milleri (Kazachstania milleri), Candida humilis, Kazachstania exigua, Saccharomyces cerevisiae, Deboryomyces hansenii, Dekkera bruxellensis, Kazachstania unispora, Kluyveromyces lactis, S. bayanus, Saccharomyces pastorianus, Torulaspora delbrueckii, T. pretoriensis, Wickerhamomyces anomalus, Pichia anomala, Hansenula anomala, Pichia kudriavzevii, Issatschenkia orientalis, Candida krusei* und Mischungen derselben.

Weiterhin stellt die vorliegende Anmeldung ein Verfahren zur Reduktion der ATls im Mehl bereit für welches eine Mehlmischung mit lebendem Sauerteig und/oder Sauerteigstartern angesetzt und fermentiert wird.

Die vorliegende Erfindung stellt einen lebenden Sauerteig und Sauerteigstarter bereit, der in der Lage ist den ATI Gehalt im angesetzten Mehl und/oder Teig zu modifizieren. Die ausgewählte Mischung zeichnet sich insbesondere dadurch aus, dass die enthaltenen Kulturen und Reinzuchtstämme in der Lage sind ATI 0.19 und/oder ATI 0.28 zu verstoffwechseln und/oder zu reduzieren.

Die im Rahmen der Erfindung bereitgestellten lebenden Sauerteige und Sauerteigstarter, die in der Lage sind, den ATI Gehalt im Mehl entsprechend der Erfindung zu beeinflussen, enthalten daher als Leitorganismus wenigstens eine der Sauerteighefen *Candida milleri, Candida humilis* und/oder *Kazachstania milleri.* Weiterhin können die erfindungsgemäßen Sauerteige oder Sauerteigstarter wenigstens einen oder mehrere weitere Sauerteighefestämme ausgewählt aus der Gruppe *Kazachstania exigua, Debaryomyces hansenii, Dekkera bruxellensis, Kazachstania unispora, Kluyveromyces lactis, Torulaspora delbrueckii, T. pretoriensis, Wickerhamomyces anomalus, Pichia anomala, Hansenula anomala, Pichia kudriavzevii, Issatschenkia orientalis, Candida krusei* und Mischungen derselben enthalten. Für die oft in Sauerteig anzutreffenden Stämme *der Gattung Saccharomyces* konnte kein Betrag zur ATI-Reduktion in der Mehlmischung nachgewiesen werden. Deren Anwesenheit ist somit nicht nötig, aber auch nicht störend.

Weiterhin vorzugsweise enthalten die erfindungsgemäßen Sauerteige wenigstens einen Mikroorganismus aus der Gruppe *L. pontis, L. sanfranciscensis* und *L. reuteri.* Die Anwesenheit von anderen bekannten Sauerteigstämmen im erfindungsgemäßen Sauerteig zeigen keine oder nur geringe zusätzliche Auswirkung auf den ATI Gehalt und stören somit nicht - nach dem derzeitigen Wissen der Erfinder - dessen Reduzierung durch die ausgewählten Organismen. Entsprechend fallen alle Sauerteige, die mittels der ausgewählten Stämme und insbesondere der Sauerteighefe *Kazachstania milleri* eine ATI Reduktion vornehmen unter den Erfindungsgedanken.

Die ausgewählten Stämme sind in dieser Kombination insbesondere geeignet, um ATI-reduzierten Mehlmischung für geschmackvolle Brote und Backwaren herzustellen, da sie in besonderem Masse die Proteinzusammensetzungen einer Mehlmischung verändern. Unter Einsatz der ausgewählten Stämme wird somit ein Teig erzeugt, der bezogen auf seine ATI Zusammensetzung durch die Stoffwechselinteraktionen der ausgewählten Stämme profitiert und darüber hinaus Gasretentionseigenschaften bzw. rheologische Eigenschaften eines normalen Weizensauerteiges zeigt.

Gemäß der vorliegenden Anmeldung ist die ATI-reduzierte Mehlmischung mit und ohne die optional zugefügten weiteren Zutaten auch besonders geeignet Teigwaren, Pasta, Feinbackwaren und natürlich klassische Brote und Backwaren herzustellen. Je nach Geschmack oder Rezeptur können hierzu optional auch Ei, Eiweiß, Eidotter, Fertigei, Milch, Hefe, Zucker, Salz, Brotgewürze, glutenfreie Getreide und/oder Pseudogetreide beides sowohl als Körner und/oder vermahlen zugefügt werden.

Typischerweise sind alle aus der erfindungsgemäßen ATI-reduzierten Mehlmischung hergestellten Sekundärprodukte im Gesamt-ATI-Gehalt im Vergleich zu Produkten hergestellt aus Typ 550 Mehl um wenigstens 40%, wenigstens 50%, wenigstens 60%, weiterhin um 70%, weiterhin um 80% und sogar bis zu 90% ATI-reduziert (Figur 9). Eine Variation (Verlängerung) in der Dauer der Fermentationszeit mit dem erfindungsgemäßen Sauerteig verändert den ATI-Gehalt der Mehlmischung und dieser kann somit je nach Bedarf eingestellt werden.

So konnten für die erfindungsgemäße Mehlmischung im Bioaktivitätstest nach Junker *et al.* (2012) eine IL-8 Ausschüttung von unter 10 ng/g Mehlmischung im IL-8 Elisatest (ThermoFischer scientific) nachgewiesen werden, während im Vergleich die handelsübliche Mehlmischung zu einer IL-8 Ausschüttung von ca. 116 ng/g Mehl führte. Dies entspricht einer mehr als 90%igen Reduktion der ATI-spezifischen Bioaktivität im Vergleich zu den Ergebnissen mit handelsüblichem Mehl. Nach derzeitigen Erkenntnissen -jedoch ohne von der Hypothese gebunden zu sein - ist die Verträglichkeit der erfindungsgemäßen Mehlmischung bei einer ATI-spezifischen Bioaktivität, die sich in einer IL-8 Ausschüttung von bis zu 60ng IL-8 pro g Mehlmischung darstellt, gewährleistet.

Die im Rahmen dieser Erfindung produzierten Backwaren und/oder Teigwaren sind daher besonders verträglich, sofern sie einen reduzierten gesamt ATI-Gehalt von wenigstens 40%, jedoch weiterhin 50%, 60%, 70%, 80% und insbesondere 90% aufweisen.

### Kurze Beschreibung der Figuren

**Figur 1** zeigt die Ergebnisse der differenzierten ATI Bestimmung der LC/MS+MS Analyse. Doppelbestimmung; weißer Balken = handelsübliches Weizenmehl der Type 550; schwarze Balken = erfindungsgemäße Mehlmischung, Dreifachbestimmung; Verglichen werden Peakflächen; alle Proben wurden jedoch gleich behandelt und im gleichen Volumen aufgenommen. Für die ATIs 0.19, 0.28 und CM3 wurden zwei Peptide eingesetzt; von CM2 und CM16 nur je ein Peptid. Während die ATIs 0.29 und 0.28 im Mehl B deutlich reduziert sind, ist für ATIs CM2, CM3 und CM16 kein Unterscheid zu zeigen.
**Figur 2** stellt die Ergebnisse der Farinographen Messung und damit das Knetverhalten der unterschiedlichen Versuchsmischungen 1-7 dar. Dargestellt sind die Farinogramme verschiedener Versuchsmischungen; Versuch 1 (-Weizenmehl 550), Versuch 2 (---ohne Gluten), Versuch 3 (---ohne Psyllium), Versuch 4 (- - - -13% Gluten 2,9% Psyllium), Versuch 5 (·········13% Gluten 0,8% Psyllium), Versuch 6(--- 6,8% Gluten 3,2% Psyllium), Versuch 7 (-13% Gluten 0,8% Psyllium 2 % Germe).
**Figur 3** zeigt den Einfluss unterschiedlicher Weizengluten auf das Knetverhalten.
Figur 4A und B zeigen den Einfluss unterschiedlicher Mengen von Weizengluten auf das Backverhalten, die optisch erkennbaren Unterschiede zeigen Brote gebacken aus Teigen mit einer Klebermenge von (von links nach rechts) ca. 4 %, ca. 12 % und ca. 19 % Weizenkleber.
**Figur 5** zeigt den Einfluss verschiedener Stärkemengen auf das Knetverhalten (Farinographenmessung).
**Figur 6** zeigt den Einfluss verschiedener Stärkemengen auf das Backverhalten (Foto): Krumenbilder von Kastenbroten mit unterschiedlichen Stärkegehalten basierend auf ATI-reduzierter Grundmischung; v.l.n.r.: ca. 95 %, ca. 83 %, ca. 70 % und ca. 50 % Stärke.
Figur 7A und B zeigt die Ergebnisse der Backversuche mit verschiedenen Backzusätzen (von links nach rechts (v.l.n.r.): Ascorbinsäure, Diastase Malz und Ascorbinsäure, α-Amylase und Ascorbinsäure.
**Figur 8** zeigt das Ergebnis einer Verkostung durch 14 Verkoster. Hierbei wurden Brötchen und Brote aus handelsüblichem Weizenmehl, mit Brötchen und Broten aus der erfindungsgemäßen Mehlmischung verglichen.
**Figur 9** zeigt die Ergebnisse der ATI-Bioaktivitätsanalyse nach Junker *et al. (2012)* an humanen Monocyten.

### Beispiele

### Beispiel 1: Einfluss unterschiedlicher Zusammensetzungen auf die Teigeigenschaften.

Es wurden verschiedene Mischungsverhältnisse von ATI-reduzierter Weizenstärke und ATIreduziertem isoliertem Weizengluten zusammengestellt und getestet. Die Versuchsteige wurden im Farinograph solange geknetet, bis die maximale Viskosität erreicht wurde. Die Teige wurden mit der Brötchenpresse rundgewirkt. Anschließend gab es eine Teigruhe von 15 Minuten. Danach wurden die Teige schonend langgewirkt und mittels Presse in kleine Teigstreifen geformt. Nach einer weiteren Ruhezeit von 35 min erfolgte die Messung.

**Tabelle 1: Versuchsrezepturen und Herstellungsübersicht**

| **Rezeptur** | **#1** | **#2** | **#3** | **#4** | **#5** | **#6** | **#7** |
|---|---|---|---|---|---|---|---|
| **Zutaten (g)** | | | | | | | |
| Weizenmehl (Typ 550) | 300 (100%) | 0 | 0 | 0 | 0 | 0 | 0 |
| Weizenstärke | 0 | 294 (96%) | 252 (85%) | 249 (83%) | 254 (85%) | 267 (89%) | 245 (82%) |
| Weizengluten A | 0 | 0 | 39,6 (13%) | 39,1 (13%) | 39,9 (13%) | 20,3 (6,8%) | 38,5 (13%) |
| Psyllium | 0 | 8,9 (2,9%) | 0 | 8,9 (2,9%) | 2,4 (0,8%) | 9,5 (3,2%) | 2,3 (0,8%) |
| Rapsöl | 0 | 4,2 (1,4%) | 3,6 (1,2%) | 3,6 (1,2%) | 3,6 (1,2%) | 3,8 (1,3%) | 3,5 (1,2%) |
| Sauerteig (Böcker Germe) | 0 | 0 | 0 | 0 | 0 | 0 | 10,5 (3,5%) |
| Wasser | 174 | 225 | 179 | 197 | 205 | 225 | 198 |
| **Knetzeit (min)** | 6 | 6,8 | 10 | 8 | 10 | 11,8 | 8,1 |
| **max. Viskosität im Farinographen (FE)** | 547 | 333 | 390 | 561 | 364 | 342 | 326 |

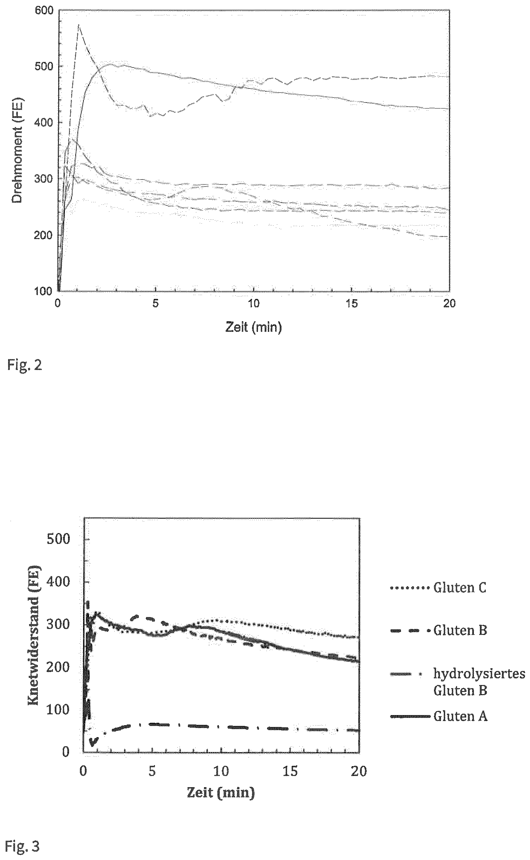

In **Figur 2** werden die Ergebnisse der Farinographenmessung dargestellt und damit die Knetkurven bzw. das Knetverhalten der unterschiedlichen Versuchsmischungen 1-7 im Vergleich zu Weizenmehl Typ 550.

Hierfür wurden die Teige mit den verschiedenen Versuchsmischungen (Rezeptübersicht siehe Tab. 1) im Farinograph bei einer Knetdauer von 20 min bei 30 °C und einer Drehzahl von 63 U/min untersucht.

In der nachfolgenden Tabelle 2 wird außerdem die Dehnbarkeit und der Dehnungswiderstand aufgeführt. Hierbei zeigen die Versuche deutliche Unterschiede zwischen allen verwendeten Mischungen. Versuchsmischung 1, stellt eine Kontrolle dar und zeigt die Dehnbarkeit und max. Viskosität von normalem Weizenmehl.

**Tabelle 2: Messparameter Mikroextensogramm**

| Versuch | Dehnbarkeit (mm) | max. Dehnwiderstand (mN) |
|---|---|---|
| 1 | 33,43 | 164 |
| 2 | 7,75 | 126 |
| 3 | 11,74 | 131 |
| 4 | 10,96 | 317 |
| 5 | 9,04 | 114 |
| 6 | 7,59 | 152 |
| 7 | 8,81 | 86 |

### Beispiel 2: Einfluss unterschiedlicher Weizengluten auf das Knetverhalten.

Es wurde der Einfluss von unterschiedlichen Klebern und isolierten Kleberproteinen auf die rheologischen Eigenschaften des Teiges untersucht.

Die unterschiedlichen Kleber wurden in folgender Rezeptur (#8) eingesetzt, die Mengen wurden nicht variiert.

**Tabelle 3:**

| **Rezeptur #8** | **Menge (g)** |
|---|---|
| Weizenstärke | 245 |
| Weizengluten | 38,5 |
| Psyllium | 2,3 |
| Rapsöl | 3,5 |
| Germe | 10,5 |
| Wasser | 198 |

Hierzu wurden Kleber, also isoliertes Weizengluten, von verschiedenen Herstellern getestet. Die Ergebnisse der Knetkurven sind in Figur 3 dargestellt.

Interessant war insbesondere das Ergebnis zu hydrolysiertem Gluten, bei welchem wie der Knetkurve entnommen werden kann, der Knetwiderstand deutlich verringert ist. Die übrigen Kleber zeigen einen vergleichbaren Knetwiderstand, allerdings ist der "2te" Anstieg zu unterschiedlichen Zeitpunkten.

### Beispiel 3: Einfluss unterschiedlicher Menge an Weizengluten auf das Backverhalten.

Hierbei sollte der Einfluss von unterschiedlichen Dosierungen von Weizengluten untersucht werden, um die Toleranzbereiche der Weizenklebermengen zu ermitteln. Die in den vorherigen Versuchsreihen verwendete Menge Weizenkleber betrug ca. 13 % und stellt den Standard da. Im Vergleich hierzu wurden Mischungen mit ca. 4% bis zu ca. 20% Gluten (bezogen auf die Gesamtmenge der Zutaten ohne Wasser) getestet.

**Tabelle 4: Testrezepturen**

| | **Rezeptur: #9** mit ca.4 % Kleber | **Rezeptur #10: mit** ca.12 % Kleber | **Rezeptur #11: mit** ca.19 % Kleber |
|---|---|---|---|
| **Rohstoff in (g)** | | | |
| Weizenstärke | 1050 | 1050 | 1050 |
| Weizenkleber | 50 | 165 | 280 |
| Psyllium | 10 | 10 | 10 |
| Germe | 24,8 | 24,8 | 24,8 |
| Rapsöl | 12 | 12 | 12 |
| Hefe | 40 | 40 | 40 |
| Salz | 25 | 25 | 25 |
| Zucker | 15 | 15 | 15 |
| GESAMT (g) | 1226,8 | 1341,8 | 1456,8 |
| Wasser (22 °C) | 735 | 810 | 900 |
| | | | |
| Knetzeit | 2+8 | 2+9 | 2+9 |
| Teigruhe | 15 min | 15 min | 15 min |
| Einwaage (g) | 650 | 650 | 650 |
| Gärzeit | 40 min | 40 min | 40 min |

Die Teige mit einer Klebermenge von unter 5 % hatten nahezu keine elastischen Eigenschaften. Die Teige mit einer Klebermenge von ca.20 % oder darüber hingegen hatten eine gummiartige Konsistenz.

Auffällig war, dass die Teige einen sehr starken "Glutengeruch" hatten. Die fertig gebackenen Brote mit einer Kleberdosierung von ca.20 % hatten ein sehr gummiartiges Kauverhalten, was im Vergleich zu einem konventionellen Weizenbrot sehr untypisch ist.

Insgesamt kann gesagt werden, dass die Dosierungen von 5 und 20 % Extreme aufzeigen und die Qualität der Backwaren auf unterschiedliche Weise negativ beeinflusst wird. Idealerweise sollte eine Klebermenge von 6% - 19% eingesetzt werden.

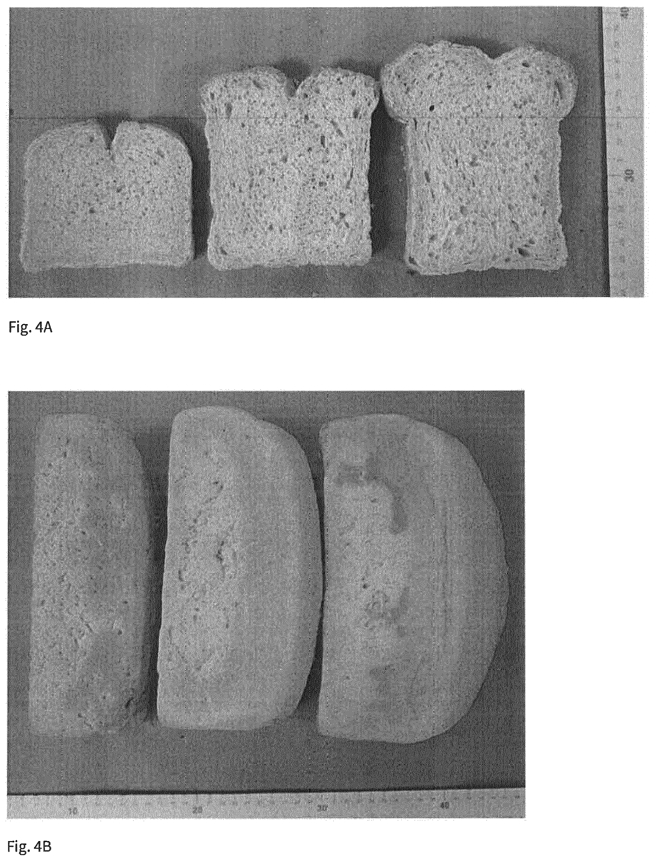

Figur 4A und 4B zeigt die optisch erkennbaren Unterschiede der Brote gebacken aus Teigen mit einer Klebermenge von (von links nach rechts) 4 %, 12 % und 19 % Weizenkleber.

### Beispiel 4: Einsatz unterschiedlicher Mengen an Stärke und deren Auswirkung auf Teigeigenschaften und das Backverhalten

In dieser Versuchsreihe wurde der Einfluss unterschiedlicher Stärkeanteile in der Grundrezeptur der ATI-reduzierten Mischung untersucht. Hierdurch ist es möglich die Variabilität der Grundmischung für später folgende Produktvarianten abzuschätzen.

In der Versuchsreihe wurden die Teigeigenschaften mittels Farinograph untersucht. Um die Einflüsse der unterschiedlichen Stärkegehalte auf die Backeigenschaften zu beurteilen, wurden Backversuche durchgeführt. Es wurden folgende Stärkegehalte untersucht: 83 % (Std.), 95 %, 70% und 50 %.

In der folgenden **Tabelle 5** sind die Rezeptur und die Messparameter dargestellt.

| **Rezeptur** | Menge (g) für ca.83 % Stärke (Standard) | Menge (g) für ca.95 % Stärke | Menge (g) für ca.70 % Stärke | Menge (g) für ca.50 % Stärke |
|---|---|---|---|---|
| Weizenstärke | 249,2 | 285 | 210,0 | 150,0 |
| Weizenkleber | 39,2 | 3,3 | 78,3 | 138,3 |
| Psyllium | 3,0 | 3,0 | 3,0 | 3,0 |
| Germe | 5,3 | 5,3 | 5,3 | 5,3 |
| Rapsöl | 3,3 | 3,3 | 3,3 | 3,3 |
| Wasser (TA 165) | 195,8 | 195,8 | 195,8 | 195,8 |

| **Messparameter** | | | | |
|---|---|---|---|---|
| Drehzahl (U/min) | 63 | | | |
| Teigtemperatur (°C) | 30 | | | |
| | 20 | | | |
| Messdauer (min) | | | | |

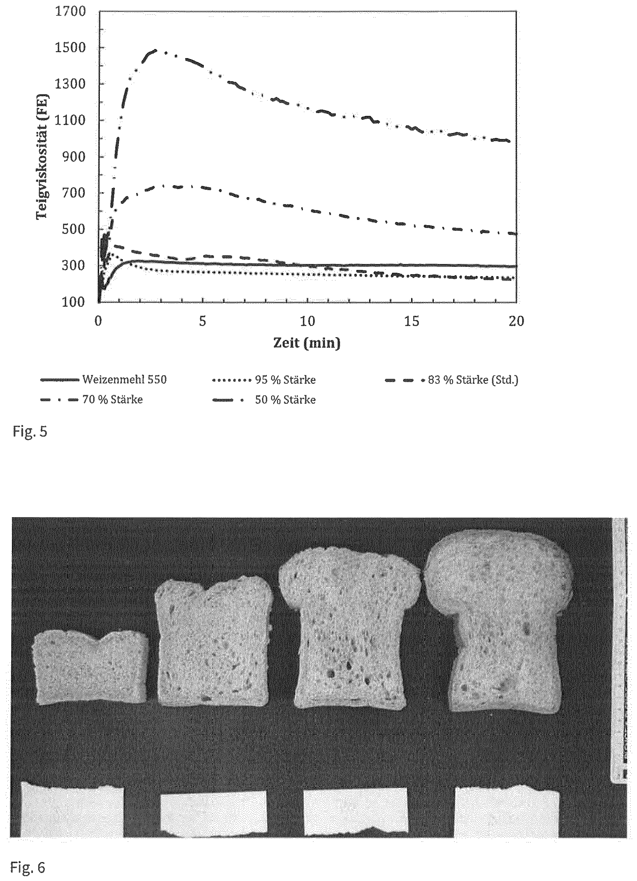

Die Farinographenmessung (Figur 5) zeigt, dass durch den Einsatz der unterschiedlichen Stärkegehalte ein wesentlicher Einfluss auf die Kneteigenschaften der Teige/ Masse genommen wird, wodurch die gesamte Kurvencharakteristik verändert wird. Auffällig ist die Ähnlichkeit der Kurven vom Weizenmehl 550 und der Testmasse mit 95 % Stärkeanteil, was jedoch wenig Auskunft über die Backfähigkeit erbringt. Wie groß die Unterschiede auf die Verarbeitungs- und Backeigenschaften sind, kann anhand der Backergebnisse (Figur 6) sowie der nachfolgenden Beschreibung beurteilt werden.

### Backversuch:

In der folgenden **Tabelle 6** sind die Rezeptur und die Herstellparameter der Backversuche, sowie deren Ergebnisse dargestellt.

| **Rezeptur** | Menge (g) für ca. 83 % Stärke (Standard) | Menge (g) für ca.95 % Stärke | Menge (g) für ca. 70 % Stärke | Menge (g) für ca. 50 % Stärke |
|---|---|---|---|---|
| Weizenstärke | 1050 | 1200 | 885 | 632 |
| Weizenkleber | 165 | 14 | 330 | 583 |
| Hydrokolloid X | 12,62 | 12,62 | 12,62 | 12,62 |
| Germe | 22,5 | 22,5 | 22,5 | 22,5 |
| Rapsöl | 14 | 14 | 14 | 14 |
| Hefe | 45 | 45 | 45 | 45 |
| Salz | 30 | 30 | 30 | 30 |
| Zucker | 15 | 15 | 15 | 15 |
| Wasser (22 °C) | 825 | 825 | 825 | 825 |

| **Herstellungsparameter** | | | | |
|---|---|---|---|---|
| Knetung (min) | 2 langsam + 9 schnell | | | |
| Teigtemperatur (°C) | 29 | | | |
| Einwaage (g) | 750 (in Kasten) | | | |
| Gare (min) | 45 | | | |
| Backtemperatur (°C) | 240 fallend auf 210 | | | |
| Backdauer (min) | 45 | | | |
| Sonstiges | Brote nach der Gare einschneiden | | | |

### Ergebnisse:

| **Probe** | **Teigtemperatur (°C)** | **Backverlust (%)** | **Volumen (ml)** | **Spezifisches Volumen (ml/g)** | **Bemerkungen** |
|---|---|---|---|---|---|
| **83 % Stärke** | 29 | 16,1 | 1960 | 3,1 | - |
| **95 % Stärke** | 26 | 18,6 | 1235 | 2,0 | Teig: feucht, klebrig, nicht aufarbeitbar |
| | | | | | Brot: keine Brotqualität |
| **70 % Stärke** | 36 | 18,2 | 2820 | 4,6 | Teig: gummiartig, starke Teigerwärmung, nicht aufarbeitbar |
| | | | | | Brot: sehr starker Ofentrieb, ballende Krume (noch akzeptabel) |
| **50 % Stärke** | 37 | 19,6 | 4750 | 7,9 | Teig: gummiartig, starke Teigerwärmung, nicht aufarbeitbar |
| | | | | | Brot: sehr starker Ofentrieb, ballende und gummiartige Krume |

### Beispiel 5: Einsatz verschiedener Hydrokolloiden und deren Auswirkung auf Teigeigenschaften und das Backverhalten

In dieser Versuchsreihe wurde der Einfluss von unterschiedlichen Hydrokolloiden auf die Grundmischungzur Herstellung ATI-reduzierter Backwaren untersucht. Durch die Ergebnisse sollte sichergestellt werden, dass die Funktionalität der Grundmischung nicht an ein bestimmtes Hydrokolloid gebunden ist. Die Dosierungen aller Hydrokolloide betrug 1 % (bezogen auf Zutaten OHNE Wasser). Dies stellt eine typische Dosierung von Hydrokolloiden bei Backwaren dar.

Um die Einflüsse der unterschiedlichen Hydrokolloide auf die Backeigenschaften zu beurteilen, wurden Backversuche durchgeführt. Es wurden folgende Hydrokolloide untersucht:
- Kein Hydrokolloid, fehlendes Hydrokolloid wurde durch Weizenstärke ersetzt (Abk.: KEIN)
- Psyllium, wird als Standard mit 0,8 % im Grundrezept eingesetzt (Abk.: Psy (Standard))
- Guarkernmehl (3500 cps) (Abk.: Guar)
- HPMC (4000 cps) (Abk.: HPMC)
- Xanthan (1550 cps) (Abk.: Xan)
- Traganth (400 cps) (Abk.: Trag)
- Konjac (36000 cps) (Abk.: Konj)
- Gummi Arabikum (- cps) (Abk.: Ara)
- Karaya (- cps) (Abk.: Kara)

### Backversuch:

In **Tabelle 7** sind die Basis-Rezeptur und die Herstellparameter der Backversuche dargestellt:

| **Rezeptur** | **Zutaten** | **Menge (g)** |
|---|---|---|
| | Weizenstärke | 1245,9 |
| | Weizenkleber A | 195,8 |
| | Hydrokolloid X | 15,0 |
| | Germe | 26,7 |
| | Rapsöl | 16,6 |
| | Hefe | 45 |
| | Salz | 30 |
| | Zucker | 15 |
| | Wasser (22 °C) | 979 |

| **Herstellungsparameter** | | |
|---|---|---|
| | Knetung (min) | 2 langsam + 9 schnell |
| | Teigtemperatur (°C) | 29 |
| | Einwaage (g) | 750 (in Kasten) |
| | Gare (min) | 45 |
| | Backtemperatur (°C) | 240 fallend auf 210 |
| | Backdauer (min) | 45 |
| | Sonstiges | Brote nach der Gare einschneiden |

In der folgenden Tabelle 8 sind Ergebnisse der Backversuche unter Einsatz der verschiedenen Hydrokolloide bzw. ohne Hydrokolloid aufgeführt.

**Tabelle 8:**

| | **Backverlust (%)** | **Volumen (ml)** | **Spezifisches Volumen (ml/g)** | **Bemerkungen** |
|---|---|---|---|---|
| **KEIN** | 15,9 | 2213 | 3,5 | Teig: weich und klebrig, nach Gare schwerschneidbar, kein Stand |
| | | | | Brot: Seiten keine Risse |
| **Psy (Std.)** | 15,7 | 1875 | 3,0 | Teig: gute Aufarbeitungseigenschaften, lange KnetzeitzurTeigausbildung |
| | | | | Brot: geringer Ofentrieb, leichte Risse an der Seite |
| **Guar** | 16,7 | 2300 | 3,7 | Teig: vergleichbar mit Psy (Std.) |
| | | | | Brot: keine Risse an der Seite |
| **HPMC** | 18,9 | 2360 | 3,9 | Teig: weich, feucht und klebrig, wenig Stand, nach Gare schwerschneidbar |
| | | | | Brot: sehr guter Ofentrieb, leichte Risse an der Seite (weniger als bei Psy Std.) |
| **Xan** | 15,2 | 1805 | 2,8 | Teig: Teige wirken "trocken" |
| | | | | Brot: starke Risse an der Seite |
| **Trag** | 16,1 | 2230 | 3,5 | Teig: weich und feucht, kein Stand Brot leichte Risse an der Seite |
| **Kon** | 16,1 | 2180 | 3,5 | Teig: fest und nicht klebrig (vergl. mit Psy Std.) |
| | | | | Brot: sehr starke Risse an der Seite |
| **Ara** | 17,2 | 2120 | 3,4 | Teig: weich und feucht, kein Stand, nach Gare schwer zu schneiden |
| | | | | Brot: leichte Risse an der Seite |
| **Kara** | 16,5 | 2115 | 3,4 | Teig: vergl. mit Psy Std. |
| | | | | Brot: starke Risse an der Seite |

### Beispiel 6: Einsatz verschiedener Backzusätze und deren Auswirkung auf Teigeigenschaften und das Backverhalten

Es sollte der Einfluss unterschiedlicher Backzusätze untersucht werden. Als Basis wurde die Rezeptur 10 aus den vorherigen Versuchen verwendet.

**Tabelle 9:**

| | **Rezeptur #11: mit Ascorbinsäure (g)** | **Rezeptur #12: Diastase Malz und Ascorbinsäure (g)** | **Rezeptur#13: α-Amylase und Ascorbinsäure (g)** |
|---|---|---|---|
| **Rohstoff in (g)** | | | |
| Weizenstärke | 1050 | 1050 | 1050 |
| Weizenkleber (Kröner) | 165 | 165 | 165 |
| Psyllium | 10 | 10 | 10 |
| Germe | 24,8 | 24,8 | 24,8 |
| Rapsöl | 15 | 15 | 15 |
| Hefe | 40 | 40 | 40 |
| Salz | 25 | 25 | 25 |
| Zucker | 12 | 12 | 12 |
| Ascorbinsäure | 0,1 | 0,1 | 0,1 |
| Diastase Malz | - | 38,55 | - |
| Fungamyl | | | 0,07 |
| Wasser (22 °C) | 810 | 810 | 810 |
| | | | |
| Knetzeit | 2+9 | 2+9 | 2+9 |
| Teigruhe | 15 min | 15 min | 15 min |
| Einwaage (g) | 650 | 650 | 650 |
| Gärzeit | 40 min | 40 min | 40 min |
| Volumen (ml) | 1790 | 1800 | 1890 |

Die Teige zeigten nahezu keine Unterschiede in ihren Eigenschaften.

Bei den Gebäcken, im Backversuch konnten Unterschiede in Abhängigkeit der Zusätze erkannt werden. Die mit Diastasemalz hergestellten Brote zeigten eine kräftigere Bräunung, aber keine Erhöhung des Volumens im Vergleich zum nur mit Ascorbinsäure hergestellten Brot. Die Brote ohne Ascorbinsäure zeigten ein vergleichbares Volumen (nicht gezeigter Versuch).

Durch den Einsatz der α-Amylase konnte eine Erhöhung des Gebäckvolumens von ca. 100 ml erzielt werden. Die Gebäcke wirkten nicht kräftiger gebräunt.

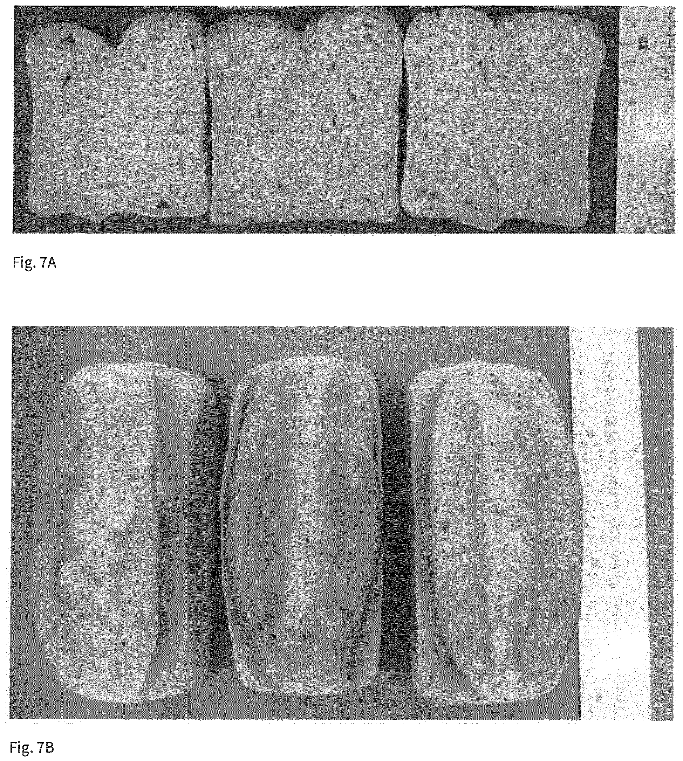

Figur 7A und 7B zeigt die Ergebnisse der Backversuche (von links nach rechts): Ascorbinsäure, Diastase Malz und Ascorbinsäure, α-Amylase und Ascorbinsäure.

### Beispiel 7: Standardisierung einer ATI-reduzierten Rezeptur

**Tabelle 10: Versuchsrezeptur#14**

| **Zutat** | **Menge (g)** | **%er Anteil in Backmischung** |
|---|---|---|
| **Weizenstärke** | 1050 | 81,3 |
| **Weizenkleber A** | 165 | 12,8 |
| **Psyllium** | 37,5 | 2,9 |
| **Germe** | 22,5 | 1,7 |
| **Rapsöl** | 15 | 1,2 |
| | | |
| **Hefe** | 60 | |
| **Salz** | 37,5 | |
| **Wasser** | 830 | |
| | | |
| **Teigtemp. (°C)** | 26 | |
| **Knetzeit (min)** | 2+7 | |
| **Gärzeit (min)** | 40 | |
| **Aufarbeitung/ Form** | Schnittbrötchen | |

### Teigeigenschaften:

Die Teigausbeute fiel mit TA 164 leicht erhöht im Vergleich zu typischen Weizenteigen aus. Die Knetzeit war etwas länger als bei konventionellen Weizenteigen. Bei der Aufarbeitung wurden deutliche Unterschiede bei den Teigeigenschaften deutlich. Die Oberfläche der Teig Teige wirkte sehr "trocken" und die Teige waren eher plastisch als elastisch, was auf das eingesetzte Psyllium zurückgeführt werden kann.

Der Teig wurde als Schnittbrötchen aufgearbeitet, diese Aufarbeitung war nahezu nicht möglich. Es konnte kein akzeptabler Schluss bei den Teiglingen erzielt werden. Dieser sprang auf, was auf die trockenen Teigeigenschaften zurückzuführen ist. Während der Gare kam es nur zu einer sehr geringen Steigerung des Volumens.

### Gebäckeigenschaften:

Die schlechte Gashaltung der Teiglinge während der Gare resultierte in Gebäcken mit einem sehr kleinen Volumen. Trotz des geringen Volumens wirkte der Schnitt der Brötchen sehr ausgeprägt. Zudem kam es während des Backens zu keiner typischen Bräunung der Gebäcke. Die Gebäcke wirkten gräulich und zeigten eine unebene "ledrige" Oberfläche. Die Oberfläche und Krume wirkte zudem "stippig", was ebenfalls auf das Psyllium zurückgeführt werden kann.

Für weitere Versuche wurde die Psylliummenge deutlich reduziert werden, da diese einen deutlichen Einfluss auf die Teig- und Backeigenschaften ausübt. Die Eigenschaften scheinen im Verhältnis zu den Gluteneigenschaften dominant zu sein.

**Tabelle 11:**

| **Versuchsrezeptur** | **#15** | | **#16** | | **#17** | |
|---|---|---|---|---|---|---|
| **Zutat** | **Menge (g)** | **% *er Anteil*** | **Menge (g)** | **% *er Anteil*** | **Menge (g)** | ***%er Anteil*** |
| **Weizenstärke** | 1050 | *87,14* | 1050 | *83,1* | 1050 | 83,1 |
| **Weizengluten** | 80 | 6,6 | 165 | 13,1 | 165 | *13,1* |
| **Psyllium** | 37,5 | 3,1 | 10 | 0,8 | 10 | 0,8 |
| **Germe** | 22,5 | 1,9 | 22,5 | 1,8 | 22,5 | 1,8 |
| **Rapsöl** | 15 | 1,2 | 15 | 1,2 | 15 | 1,2 |
| | | | | | | |
| **Hefe** | 60 | | 60 | | 60 | |
| **Salz** | 37,5 | | 37,5 | | 37,5 | |
| **Wasser** | 930 | | 880 | | 850 | |
| **Zucker** | - | | - | | 11 | |
| | | | | | | |
| **Teigtemp. (°C)** | 26 | | 26 | | 26 | |
| **Knetzeit (min)** | 2+8 | 2+8 | 2+9 | | | |
| **Gärzeit (min)** | 35 | 35 | 35 | | | |
| **Aufarbeitung/Form** | Kasten und freigeschoben | Kasten und freigeschoben | Kasten und freigeschoben | | | |

### Versuchsrezeptur 15:

Die Teig- und Gebäckeigenschaften waren mit denen aus Versuchsrezeptur 14 vergleichbar. Hiermit bestätigte sich der Eindruck, dass bei einer zu hohen Psylliumdosierung, die Eigenschaften dieses Hydrokolloides überwiegen und keine viskoelastischen Eigenschaften entstehen.

### Versuchsrezeptur 16:

Die Teigeigenschaften waren mit denen eines Weizenteiges vergleichbar. Die gewählte Teigausbeute von TA 169 war hoch, die Teige waren für die Aufarbeitung sehr weich. Die Gebäcke waren mit konventionellen Broten hinsichtlich der Krumenstruktur und der Ausbundbildung vergleichbar. Deutlich auffällig war die untypische gräuliche Krustenfarbe.

### Versuchsrezeptur 17:

Es erfolgte eine Anpassung derTeigausbeute (TA 167) und der Knetzeit, wodurch Teigeigenschaften erzielt wurden, wie sie bei konventionellen Weizenteigen typisch sind. Hierdurch und durch den Einsatz von Zucker wurde das Volumen, der Ausbund, die Krumenstruktur und die Färbung der Kruste dahingehend verbessert, dass ein Unterschied zu einem herkömmlichen Weizenbrot nahezu nicht erkennbar ist.

### Verkostung

In Geschmacksverkostungen wurde ermittelt, wie die mit Versuchsmischung 17 (erfindungsgemäße Mischung) und derVersuchsmischung 1 (Weizenmehl) hergestellten Brötchen und Brote im Vergleich auf 14 Testern wirkten. Hierzu wurden der optische Eindruck (Färbung und Erscheinungsbild), Geruch und Aroma, Geschmack sowie Textur und Haptik bewertet.

Im Ergebnis (Figur 8) zeigt sich, dass die Tester zwar unterschiedliche Bewertungen abgeben und insbesondere bezüglich des Geschmack Unterschiede wahrgenommen werden konnten, allerdings im Gesamteindruck die aus Standardmehl bzw. dem ATI-reduzierten Mehlmischung hergestellten Produkte hochgradig ähnlich und bezüglich Haptik, Textur und Färbung und Erscheinungsbild vergleichbar sind.

### Beispiel 8: ATI-BIOAKTIVITÄTS Bestimmung für Versuchsrezepturen

Die ATI Bioaktivität der Versuchsrezeptur 17 (erfindungsgemäße Mehlmischung) und Versuchsrezeptur 1 (handelsübliches Weizenmehl) wurde verglichen mit der Methode Junker et al., 2012 (JEM, 2012) und z. B. beschrieben in WO2017075456.

Hierzu wird die Bioaktivität von ATIs an humanen Monocyten, z. B. derTHP-1 Zellinie, getestet. Konfluent gezogene THP-1 Zellen werden hierzu mit in neutralem Puffer gelösten Mehlmischungsextraktion stimuliert. In Abhängigkeit der ATI Menge wird von dieser Zelllinie IL-8 in den Überstand abgegeben, das dann mittels eines standardisierten ELISAs gemäß den Angaben des Herstellers (ThermoFischerscientific) bestimmt wurde.

Interessanterweise zeigten sich deutlich unterschiedliche Zytokin-Ausschüttungen im Überstand von Testzellen und weisen damit auf eine unterschiedliche Bioaktivität der enthaltenen ATIs hin. Figur 9 zeigt das Ergebnis des IL-8 spezifischen ELISA Assay, für welchen geeignete Testzellen, nämlich ATI-reaktive Zellen - gemäß WO2017075456 z.B. TLR4-exprimierende Zellen, vorzugsweise TLR4-exprimierene Monocyten mit ATI Extrakten (Pufferextraktion) in Kontakt gebracht werden und anschließend im Überstand die Zytokin-Freisetzung, nämlich eine IL-8 Freisetzung mittels ELISA gemessen wird. Figur 9 zeigt dabei, dass die erfindungsgemäße Mehlmischung im Vergleich mit einem handelsüblichen Standardmehl eine deutlich niedrigere (mehr als 90% niedrige) IL-8 Ausschüttung im ATI-Bioaktivitätstest auslöst.

Aus diesen Daten ist eindeutig zu schließen, dass Patienten, die ATI-sensitive sind und die verschiedene NCGS Symptome zeigen, eine deutlich bessere Verträglichkeit und Bekömmlichkeit von Produkten hergestellt aus der erfindungsgemäßen Mehlmischung erwarten können.

### Beispiel 9: Differenzierte ATI Bestimmung

Für die Versuchsrezeptur 17 (erfindungsgemäße Mehlmischung - schwarzer Balken) und Versuchsrezeptur 1 (handelsübliches Standardmehl - weißer Balken) wurde mittels LC-MS/MS eine differenzierte ATI Bestimmung in Anlehnung an Prandi et al. (Food Chemistry, 2013, 141-146) durchgeführt.

Hierzu wurden Peptide, die aus einer enzymatischen Spaltung der salzlöslichen Extrakte stammen, mittels der LC-MS/MS Methode identifiziert. Leitpeptide für ATI-Quantifizierung sind die ATI 0.19, 0.28 und CM3 mit je 2 Spaltpeptiden sowie die ATI CM2, und CM16 mit einem Spaltpeptid. Alle Messungen wurden mindestens in Doppelbestimmungen durchgeführt. Figur 1 stellt die Ergebnisse dar.

Wie von Figur 1 ersichtlich weist die erfindungsgemäße Mehlmischung, einen viel niedrigeren Anteil an ATI 0.19 und ATI 0.28 im Gegensatz zu dem Standardmehl auf während der ATI CM3 Anteil sowie der ATI CM2 und CM16 Anteil unverändert bleibt. Dabei beschriebt die Y-Achse der Figur 1 die Fläche der Peaks, die bei der Chromatographie bestimmt worden sind. Dem Fachmann ist allgemein bekannt, dass die (Peak-)Fläche proportional zur Konzentration des Analyten (in unserem Fall der verschiedenen ATI Proteine) ist.

Die Erfinder konnten somit zeigen, dass Ihre Versuchsmischung 17, für die eine verminderte ATI Bioaktivität aufzufinden war, überraschenderweise hauptsächlich der Gehalt des ATI 0.19 und des ATI 0.28 reduziert waren, während die anderen ATs geringere Unterschiede zeigten.

### Beispiel 10: Zucker Bestimmung nach AOAC Methode (997.08)

Für die Versuchsrezeptur 17 (erfindungsgemäße Mehlmischung und Versuchsrezeptur 1 (handelsübliches Standardmehl) wurde mittels der Standard Methode AOAC Methode (997.08) eine Gesamtzuckerbestimmung durchgeführt.

| Zuckerstoff (g/100g) | Handelsübliches Weizenmehl | Erfindungsgemäße Mehlmischung |
|---|---|---|
| Glucose (g/100 g) | <0,1 | <0,1 |
| Fructose | <0,1 | <0,1 |
| Saccharose | 0,3 | <0,1 |
| Fructooligosaccharide | 1,0 | 0,1 |

## Patentansprüche

1. Mehlmischung **dadurch gekennzeichnet, dass** die Mehlmischung eine oder mehrere alpha-**A**mylase/**T**rypsin-**I**nhibitoren (ATI)-reduzierte Proteinquellen, eine oder mehrere isolierte, ATI-reduzierte Stärkequellen, optional ein oder mehrere Hydrokolloide und/oder optional Backzusätze enthält und **dadurch gekennzeichnet, dass** der Gehalt an ATI 0.19 und/oder der Gehalt an ATI 0.28 der Mehlmischung im Vergleich zu Typ 550 Mehl um wenigstens 40% reduziert ist und wobei die wenigstens eine Proteinquelle ausgewählt ist aus der Gruppe enthaltend Getreidekleberprotein, isoliertes Weizengluten, isolierte Glutenvarianten aus Dinkel, Roggen, Gerste, Emmer, Hafer oder Einkorn, isolierte Glutenbestandteile sowie Mischungen derselben und wobei zusätzlich wenigstens ein oder mehrere Backzusätze zugegeben werden, welche ausgewählt werden aus der Gruppe enthaltend Sauerteig, Sauerteigkonzentrat und/oder getrockneter Sauerteig.

2. Mehlmischung gemäß Anspruch 1 **dadurch gekennzeichnet, dass** die Mischung 5-25% Gewichtsprozent Kleberproteine enthält.

3. Mehlmischung gemäß einem der Ansprüche 1 oder 2 **dadurch gekennzeichnet, dass** die wenigstens eine Stärkequelle ausgewählt ist aus der Gruppe enthaltend Weizenstärke, Weichweizenstärke und Hartweizenstärke.

4. Mehlmischung gemäß Anspruch 3 **dadurch gekennzeichnet, dass** die wenigstens eine Stärkequelle eine Mischung ist, die Weizenstärke und wenigstens eine weitere Stärke-quelle enthält ausgewählt aus der Gruppe enthaltend Maisstärke, Kartoffelstärke, Tapiokastärke, hydrolysierte Stärke, Roggenstärke, Haferstärke, Gerstenstärke und Mischungen derselben.

5. Mehlmischung gemäß einem der Ansprüche 1 bis 4 **dadurch gekennzeichnet, dass** die Mischung 50-95% Gewichtsprozent Stärke enthält.

6. Mehlmischung gemäß einem der Ansprüche 1 bis 5 **dadurch gekennzeichnet, dass** wenigstens ein oder mehrere Hydrokolloide ausgewählt aus der Gruppe enthaltend Psyllium, Guarkernmehl, Chiasamenmehl, Leinsamenmehl, Xanthan, Traganth, Konjac, Gummi Arabikum, Karaya und HPMC (Hydroxy-Propyl-Methyl-Cellulose), Sonnenblumenkernmehl und Mischungen derselben enthalten sind.

7. Mehlmischung gemäß einem der Ansprüche 1 bis 6 **dadurch gekennzeichnet, dass** die Mischung bis zu 3% Gewichtsprozent Hydrokolloide enthält.

8. Mehlmischung gemäß Anspruch 1 **dadurch gekennzeichnet, dass** eine ATI Extraktion dieser Mischung eine Bioaktivität aufweist, die einer IL-8 Ausschüttung von 8 bis 60ng IL-8 pro Gram der Mischung entspricht und im IL-8 spezifischen ELISA Assay nachweisbar ist.

9. Mehlmischung gemäß einem der Ansprüche 1 bis 8 **dadurch gekennzeichnet, dass** zusätzlich wenigstens ein oder mehrere Backzusätze zugegeben werden, welche ausgewählt werden aus der Gruppe enthaltend Backtriebmittel und Hefe.

10. Mehlmischung mit Sauerteig oder Sauerteigkonzentrat gemäß Anspruch 9, **dadurch gekennzeichnet, dass** die Mehlmischung wenigstens einen Sauerteighefen Stamm ausgewählt aus der Gruppe enthaltend *Candida milleri, Candida humilis* und/oder *Kazachstania milleri* und Mischungen derselben; und optional weiterhin wenigstens einen Mikroorganismus Stamm aus der Gruppe *L. pontis, L. sanfranciscensis* und *L. reuteri* und Mischungen derselben enthält.

11. Mehlmischung mit Sauerteig oder Sauerteigkonzentrat gemäß einem der Ansprüche 9 oder 10, **dadurch gekennzeichnet, dass** zusätzlich Fructooligosaccharide ausgewählt aus der Gruppe der fermentierbare Oligo-, Di-, Monosaccharide und Polyole reduziert sind.

12. Verfahren zur Herstellung der Mehlmischung gemäß einem der Ansprüche 1 bis 11 **dadurch gekennzeichnet, dass** die Mehlmischung mit Sauerteig oder Sauerteigstarter, der wenigstens einen oder mehrere Sauerteighefestämme ausgewählt aus der Gruppe *Candida milleri, Candida humilis, Kazachstania milleri, Kazachstania exigua, Debaryomyces hansenii, Dekkera bruxellensis, Kazachstania unispora, Kluyveromyces lactis, Torulaspora delbrueckii, T. pretoriensis, Wickerhamomyces anomalus, Pichia anomala, Hansenula anomala, Pichia kudriavzevii, Issatschenkia orientalis, Candida krusei* und Mischungen derselben enthält; und optional wenigstens einen Mikroorganismus Stamm ausgewählt aus der Gruppe enthaltend *L. pontis, L. sanfranciscensis* und *L. reuteri* und Mischungen derselben enthält, angesetzt und fermentiert wird.

13. Teigwaren hergestellt aus der Mehlmischung gemäß einem der Ansprüche 1 bis 11, Wasser und/oder Milch, und optional Ei, Eiweiß, Eidotter oder Fertigei **dadurch gekennzeichnet, dass** der Gesamt-ATI-Gehalt im Vergleich zu Teigwaren hergestellt aus Typ 550 Mehl um wenigstens 40% reduziert ist.

14. Backwaren hergestellt aus der Mehlmischung gemäß einem der Ansprüche 1 bis 11, optional enthaltend Backtriebmittel, Hefe, Zucker, Salz, Brotgewürze, glutenfreie Getreide und/oder Pseudogetreide als Körner und/oder vermahlen und Wasser **dadurch gekennzeichnet, dass** der Gesamt-ATI-Gehalt im Vergleich zu Backwaren hergestellt aus Typ 550 Mehl um wenigstens 40% reduziert ist.

## Claims

1. A flour mixture **characterized in that** the flour mixture contains one or more alpha-amylase/trypsin inhibitor (ATI) reduced protein sources, one or more isolated ATI-reduced starch sources, optionally one or more hydrocolloids and/or optionally baking additives, and **characterized in that** the content of ATI 0.19 and/or the content of ATI 0.28 of the flour mixture is reduced by at least 40% compared to type 550 flour, and wherein the at least one protein source is selected from the group comprising cereal gluten protein, isolated wheat gluten, isolated gluten variants from spelt, rye, barley, emmer, oat or einkorn, isolated gluten components as well as mixtures thereof, and wherein additionally at least one or more baking additives are added which are selected from the group comprising sourdough, sourdough concentrate and/or dried sourdough.

2. The flour mixture according to claim 1, **characterized in that** the mixture contains 5-25% by weight of gluten proteins.

3. The flour mixture according to either of claims 1 or 2, **characterized in that** the at least one starch source is selected from the group comprising wheat starch, common wheat starch and durum wheat starch.

4. The flour mixture according to claim 3, **characterized in that** the at least one starch source is a mixture comprising wheat starch and at least one other starch source selected from the group comprising corn starch, potato starch, tapioca starch, hydrolyzed starch, rye starch, oat starch, barley starch and mixtures thereof.

5. The flour mixture according to any of claims 1 to 4, **characterized in that** the mixture contains 50-95% starch by weight.

6. The flour mixture according to any one of claims 1 to 5, **characterized in that** the flour mixture contains at least one or more hydrocolloids selected from the group comprising psyllium, guar gum flour, chia seed flour, flax seed flour, xanthan gum, tragacanth, konjac, gum arabic, gum karaya and HPMC (hydroxypropyl methylcellulose), sunflower seed flour and mixtures thereof.

7. The flour mixture according to any of claims 1 to 6, **characterized in that** the mixture contains up to 3% by weight of hydrocolloids.

8. The flour mixture according to claim 1, **characterized in that** an ATI extraction of the mixture has a bioactivity corresponding to an IL-8 release of 8 to 60ng IL-8 per gram of the mixture and is detectable in the IL-8 specific ELISA assay.

9. The flour mixture according to any of claims 1 to 8, **characterized in that** additionally at least one or more baking additives are added, which are selected from the group comprising leavening agents and yeast.

10. A flour mixture according to claim 9 that contains sourdough or sourdough concentrate, **characterized in that** the flour mixture comprises at least one sourdough yeast strain selected from the group comprising *Candida milleri, Candida humilis* and/or *Kazachstania milleri* and mixtures thereof; and optionally further at least one microorganism strain selected from the group comprising *L. pontis, L. sanfranciscensis* and *L. reuteri* and mixtures thereof.

11. The flour mixture with sourdough or sourdough concentrate according to either of claims 9 or 10, **characterized in that** additionally fructooligosaccharides selected from the group of fermentable oligosacchrarides, disaccharides, monosaccharides and polyols are reduced.

12. A process for preparing the flour mixture according to any of claims 1 to 11, **characterized in that** the flour mixture is prepared with sourdough or sourdough starter comprising at least one or more sourdough yeast strains selected from the group of *Candida milleri, Candida humitis, Kazachstania milleri, Kazachstania exigua, Debaryomyces hansenii, Dekkera bruxellensis, Kazachstania unispora, Kluyveromyces lactis, Torulaspora delbrueckii, T. pretoriensis, Wickerhomomyces anomalus, Pichia anomala, Hansenula anomala, Pichia kudriovzevii, Issatschenkia orientalis, Candida krusei* and mixtures thereof; and optionally at least one microorganism strain selected from the group comprising *L. pontis, L. sanfranciscensis* and *L. reuteri* and mixtures thereof is prepared and fermented.

13. Pasta made from the flour mixture according to any of claims 1 to 11, water and/or milk, and optionally egg, egg white, egg yolk or preprocessed eggs, **characterized in that** the total ATI content is reduced by at least 40% compared to pasta made from type 550 flour.

14. Baked goods made from the flour mixture according to any of claims 1 to 11, optionally containing leavening agents, yeast, sugar, salt, bread spices, gluten-free cereals and/or pseudo cereals as grains and/or milled and water, **characterized in that** the total ATI content is reduced by at least 40% compared to baked goods made from type 550 flour.

## Revendications

1. Mélange de farine **caractérisé en ce que** le mélange de farine contient une ou plusieurs sources de protéines à teneur réduite en inhibiteurs d'alpha-amylase/trypsine (IAT), une ou plusieurs sources d'amidon à teneur réduite en IAT, en option un ou plusieurs hydrocolloïdes et/ou en option des additifs de boulangerie, et **caractérisé en ce que** le taux d'IAT 0.19 et/ou le taux d'IAT 0.28 du mélange de farine est réduit d'au moins 40 % par rapport à la farine de type 550, et sachant qu'au moins l'une des sources de protéines est sélectionnée à partir du groupe contenant de la protéine de gluten de céréales, du gluten de blé isolé, des variantes de gluten isolées parmi l'épeautre, le seigle, l'orge, le blé amidonnier, l'avoine ou l'engrain, des composants de gluten isolés ainsi que des mélanges de ceux-ci et sachant que, à titre supplémentaire, au moins un ou plusieurs additifs de boulangerie sont ajoutés, qui sont sélectionnés parmi le groupe contenant du levain, du concentré de levain et/ou du levain séché.

2. Mélange de farine selon la revendication 1, **caractérisé en ce que** le mélange contient 5 à 25 pour cent en poids de protéines de gluten.

3. Mélange de farine selon une quelconque des revendications 1 à 2, **caractérisé en ce qu'**au moins une source d'amidon est sélectionnée à partir du groupe contenant de l'amidon de blé, de l'amidon de blé tendre et de l'amidon de blé dur.

4. Mélange de farine selon la revendication 3, **caractérisé en ce qu'**au moins l'une des sources d'amidon est un mélange qui contient de l'amidon de blé et au moins une autre source d'amidon sélectionnée à partir du groupe contenant de l'amidon de maïs, de l'amidon de pomme de terre, de l'amidon de tapioca, de l'amidon hydrolysé, de l'amidon de seigle, de l'amidon d'orge et des mélanges de ceux-ci.

5. Mélange de farine selon une quelconque des revendications 1 à 4, **caractérisé en ce que** le mélange contient 50 à 95 pour cent en poids de protéines d'amidon.

6. Mélange de farine selon une quelconque des revendications 1 à 5, **caractérisé en ce que** sont contenus au moins un ou plusieurs hydrocolloïdes sélectionnés à partir du groupe contenant du psyllium, de la farine de gomme de guar, de la farine de graines de chia, de la farine de graines de lin, de la gomme xanthane, de la gomme adragante, du konjac, de la gomme arabique, de la gomme karaya et de l'HPMC (hydroxy-propyle-méthyle-cellulose), de la farine de tournesol et des mélanges de ceux-ci.

7. Mélange de farine selon une quelconque des revendications 1 à 6, **caractérisé en ce que** le mélange jusqu'à 3 % en poids de protéines d'hydrocolloïdes.

8. Mélange de farine selon la revendication 1, **caractérisé en ce qu'**une extraction d'IAT de ce mélange présente une activité biologique qui correspond à une distribution d'IL-8 de 8 à 60 ng d'IL-8 par gramme du mélange et est décelable dans le test ELISA spécifique à l'IL-8.

9. Mélange de farine selon une quelconque des revendications 1 à 8, **caractérisé en ce que**, à titre supplémentaire, au moins un ou plusieurs additifs de boulangerie sont ajoutés, qui sont sélectionnés à partir du groupe contenant du levain et de la levure.

10. Mélange de farine avec du levain ou du concentré de levain selon la revendication 9, **caractérisé en ce que** le mélange de farine contient au moins une souche de levures au levain sélectionnés à partir du groupe contenant *Candida milleri, Candida humilis* et/ou *Kazachstania milleri* et des mélanges de celles-ci ; et en option par ailleurs au moins une souche de microorganismes issue du groupe *L. pontis, L. sonfronciscensis* et *L. reuteri* et de mélange de ceux-ci.

11. Mélange de farine avec du levain ou du concentré de levain selon la revendication 9, **caractérisé en ce que**, à titre supplémentaire, des fructo-oligosaccharides, sélectionnés à partir du groupe des oligo-, des di-, des monosaccharides et des polyols, sont réduits.

12. Procédé en vue de la fabrication du mélange de farine selon une quelconque des revendications 1 à 11, **caractérisé en ce que** le mélange de farine est préparé ou fermenté avec du levain ou du démarreur de levain qui contient au moins une ou plusieurs souches de levure de levain sélectionnées parmi les groupes *Candida milleri, Candida humilis, Kazachstania milleri, Kazachstania exiguo, Deboryomyces honsenii, Dekkera bruxellensis, Kazachstania unispora, Kluyveromyces lactis, Torulaspora delbrueckii, T. pretoriensis, Wickerhamomyces anomalus, Pichia anomala, Hansenula anomala, Pichia kudriavzevii, Issatschenkia orientalis, Candida krusei* et des mélanges de ceux-ci ; et contient en option au moins une souche de microorganismes sélectionnés parmi les groupes contenant *L. pontis, L. sonfranciscensis* et *L. reuteri* et des mélanges de ceux-ci.

13. Pâtes alimentaires fabriquées à partir du mélange de farine selon une quelconque des revendications 1 à 11, d'eau et/ou de lait, et en option d'oeuf, de blanc d'oeuf, de jaune d'oeuf ou de jaune d'oeuf fini, **caractérisées en ce que** la teneur totale en IAT est réduite d'au moins 40 % par rapport aux pâtes alimentaires préparées à partir de farine de type 550.

14. Pâtes alimentaires fabriquées à partir du mélange de farine selon une quelconque des revendications 1 à 11, contenant en option du levain, de la levure, du sucre, du sel, des épices à pain, des céréales sans gluten et/des pseudo-céréales en grains et/ou moulues et de l'eau, **caractérisées en ce que** la teneur totale en IAT est réduite d'au moins 40 % par rapport aux pâtes alimentaires préparées à partir de farine de type 550.
